# EUROPÄISCHE PATENTSCHRIFT

(11) **EP 4 459 182 B1**
(45) Veröffentlichungstag und Bekanntmachung des Hinweises auf die Patenterteilung: **29.10.2025**
(21) Anmeldenummer: 24162015.2
(22) Anmeldetag: 07.03.2024
(51) Int. Cl.: F23C 6/04, F23C 7/00, F23C 13/06, F23G 5/027, F23G 7/10, F23G 7/07

(54) **VERFAHREN UND VORRICHTUNG ZUM ERZEUGEN EINES RAUCHGASES**
METHOD AND DEVICE FOR PRODUCING A FLUE GAS
PROCÉDÉ ET DISPOSITIF POUR LA PRODUCTION D'UN GAZ DE FUMÉE

(30) Priorität: 02.05.2023 AT 503272023
(43) Veröffentlichungstag der Anmeldung: 06.11.2024
(73) Patentinhaber: Polytechnik Luft- und Feuerungstechnik GmbH, 2564 Weissenbach (AT)
(72) Erfinder: Obernberger, Ingwald, 8010 Graz (AT)
(74) Vertreter: Beer & Partner Patentanwälte KG

(56) Entgegenhaltungen:
- EP-A1- 2 860 450

## Beschreibung

Die Erfindung betrifft ein Verfahren zur Erzeugung eines Rauchgases aus einem brennbaren und staubarmen Gas oder Gasgemisch, das direkt oder indirekt aus festen Biomassebrennstoffen, biogenen Reststoffen und/oder biogenen Abfällen erzeugt wird, wobei das Rauchgas in einer Gasbrennkammer erzeugt wird, die an einem Ende einen Gaseinlass, an ihrem anderen Ende einen Gasauslass, und dazwischen einen integrierten Hochtemperatur-3-Wege-Katalysator aufweist, der die Gasbrennkammer in einen in Strömungsrichtung gesehenen vorderen Bereich und einen in Strömungsrichtung gesehenen hinteren Bereich mit thermisch isolierten Wänden aufteilt.

Weiters betrifft die Erfindung eine Vorrichtung zur Erzeugung eines Rauchgases aus einem brennbaren und staubarmen Gas oder Gasgemisch, die direkt oder indirekt aus festen Biomassebrennstoffen, biogenen Reststoffen und/oder biogenen Abfällen erzeugt werden, mit einer Gasbrennkammer, die an einem Ende einen Gaseinlass und an ihrem anderen Ende einen Gasauslass aufweist.

Verfahren und Vorrichtungen zur Erzeugung heißer Rauchgase durch die thermochemische Konversion von Biomassebrennstoffen, biogenen Reststoffen bzw. biogenen Abfällen sind hinlänglich bekannt und werden vielseitig eingesetzt. In diesem Zusammenhang lässt sich der Begriff Rauchgas auch durch den gleichbedeutenden Begriff Abgas ersetzen und umgekehrt.

Die derart erzeugten heißen Rauchgase können für mehrere Zwecke verwendet werden, z.B. zur Herstellung von Dampf, heißem Wasser oder heißen Thermoölen.

Konventionelle Biomasseverbrennungstechnologien zur Erzeugung heißer Abgase setzen relativ hohe Stickoxidemissionen frei, die auf der teilweise stattfindenden Umwandlung von dem im Brennstoff enthaltenen Stickstoff in Stickoxide (NOx) beruhen.

Die NOx-Emissionen von Biomasseverbrennungsanlagen sind somit typischerweise direkt vom Stickstoffgehalt des eingesetzten Brennstoffes abhängig.

Die NOx-Emissionen von Biomasseverbrennungsanlagen können durch moderne, gestufte Verbrennungssysteme zwar etwas reduziert werden, jedoch reicht diese Reduktion oft nicht aus, um die immer strengeren Vorgaben betreffend NOx-Grenzwerte im Abgas zu erfüllen. Oft ist daher zur Senkung der NOx-Emissionen eine Sekundärmaßnahme, wie z.B. die Abgasnachbehandlung in einer Anlage zur selektiven nicht-katalytischen Reduktion (SNCR-Anlage) oder einer Anlage zur selektiven katalytischen Reduktion (SCR-Anlage) erforderlich, was jedoch investitions- und betriebskostenintensiv ist.

Beim SNCR-Verfahren wird als Reduktionsmittel Ammoniak (NH₃) oder Harnstoff im Temperaturbereich von typischerweise 850°C bis 1050°C, in die Nachbrennkammer der Feuerung (in der oxidierende Bedingungen herrschen), eingedüst.

Nachteilig an derartigen Verfahren ist, dass für diese eine vergrößerte Brennkammer bereitstehen muss (da das Abgas für die Reduktion der Stickoxide eine erhöhte Verweilzeit bei hoher Temperatur benötigt), dass sie aufgrund des benötigten Reduktionsmittels im Betrieb kostenintensiv sind, dass eine entsprechende Temperaturmessung und Regelung vorgesehen sein muss, um das Eindüsen des Reduktionsmittels im passenden Temperaturbereich zu gewährleisten, und dass dabei ein Ammoniakschlupf (bei der Reduktion überbleibendes NH₃) entsteht, wobei die Vorgaben hinsichtlich NH₃-Emissionen im Abgas immer strenger werden. Die erzielbare NOx-Reduktion ist bei SNCR-Anlagen typischerweise auf 60-70% begrenzt.

In EP 2 635 365 B1 und DE 4434943 A1 sind spezielle Düsentechnologien zur Verbesserung des SNCR-Verfahrens beschrieben.

Beim SCR-Verfahren werden die auf ca. 220-450 °C abgekühlten Abgase unter Zugabe von Ammoniak oder Harnstoff durch einen Katalysator geleitet, in dem die Stickoxide (NOx) zu molekularem Stickstoff abgebaut werden. Anders als beim SNCR-Verfahren wird beim SCR-Verfahren die Reaktion von NOx mit dem Reduktionsmittel an der Katalysatoroberfläche beschleunigt und läuft deshalb bereits bei wesentlich geringeren Temperaturen ab. Auch ermöglicht der Katalysator eine bessere Ausnutzung des Reduktionsmittels und erlaubt damit höhere Reduktionsgrade und einen geringeren Reduktionsmittelbedarf.

In SCR-Anlagen auftretende Probleme sind meist auf Katalysatorgifte (z.B. Staub, S, K) im Abgas und somit auf eine unzureichende Gasreinigung vor der SCR-Anlage zurückzuführen. Der Einsatz einer SCR-Anlage erfordert daher eine aufwendige Entstaubung und unter Umständen auch Entschwefelung des Abgases und meist auch zusätzliche Wärmetauscher, um die SCR-Anlage im richtigen Temperaturfenster betreiben und dennoch hohe Gesamtwirkungsgrade erreichen zu können.

In EP 1 147 801 B2 ist eine Verbesserung des SCR-Verfahrens mittels eines zusätzlichen Oxidationskatalysators beschrieben. Die US 6,267,940 beschreibt ein mit einem SCR-Verfahren kombinierbares Verfahren zur Reduktion von Stickoxiden in einem Gasstrom, bei dem ein NO-reduzierendes Katalysatorpulver in den Rauchgasstrom injiziert wird, das dann durch eine entsprechende Staubabscheideeinrichtung wieder aus dem Rauchgas abgetrennt, aktiviert und wieder eingesetzt werden kann.

Die EP 2 860 450 A1 offenbart die Vergasung von Biomasse mit anschließender Heißfiltration; es folgt eine Zufuhr von Sauerstoff und eine katalytische Oxidation (ein Temperaturniveau wird nicht genannt) gefolgt von einer vollständigen Nachverbrennung.

Ebenfalls zur Abgasnachbehandlung eingesetzte 3-Wege-Katalysatoren werden vor allem bei Ottomotoren für Autos, Motorräder und Motorboote angewendet sowie für Stationärmotoren, in denen auch alternative Gase wie Deponiegas oder Biogas als Brennstoff zum Einsatz kommen können. Der Aufbau derartiger 3-Wege-Katalysatoren ist hinreichend bekannt.

3-Wege-Katalysatoren ermöglichen gleichzeitig drei grundsätzliche Reaktionen zur Emissionsreduktion in heißen Gasen: Die Oxidation von Kohlenmonoxid (CO) und Kohlenwasserstoffen (HC) und die Reduktion von Stickoxiden (NO). Um diese Reaktionen effizient parallel ablaufen zu lassen, muss der 3-Wege-Katalysator bei einem Verbrennungsluftverhältnis (stöchiometrischen Luftverhältnis von λ ~ 1 betrieben werden. Für einen optimalen Betrieb mit hohen Umsetzungsraten ist weiters eine Betriebstemperatur von > 400°C erforderlich. Ab 800°C kommt es bei den meisten Katalysatoren jedoch zu einer verstärkten Alterung, wobei Weiterentwicklungen der vergangenen Jahre auch temperaturbeständigere (bis 1.000°C) Katalysatoren hervorgebracht haben. Zur Deaktivierung bzw. Vergiftung des Katalysators können auch verschiedene Katalysatorgifte, wie Schwefel, Chlor, Phosphor oder Schwermetalle führen. Mit dem Brenngas eingebrachter Feinstaub wirkt sich ebenfalls negativ aus, da er sich an der Katalysatoroberfläche ablagert und dadurch zu einer Verringerung der Abscheideleistung führt. Bereiche der Katalysatoroberfläche sind dann für das Rauchgas nicht mehr erreichbar. Stetige Weiterentwicklungen der im Katalysator eingesetzten Washcoats und Beschichtungen, sowie der Einsatz neuer Materialen führten jedoch in den vergangenen Jahren zu einer Verbesserung, insbesondere einer verbesserten Alterungsbeständigkeit und Giftresistenz, von 3-Wege-Katalysatoren. In Kombination mit Biomassefeuerungen werden 3-Wege-Katalysatoren jedoch bislang nicht eingesetzt, da eine Regelung um Lambda 1 aufgrund der Inhomogenität von Biomassebrennstoffen, biogenen Reststoffen und/oder biogenen Abfällen sehr aufwändig und kaum stabil umsetzbar ist.

Der Erfindung liegt die Aufgabe zu Grunde, ein Verfahren der eingangs genannten Gattung zur Verfügung zu stellen, das die angesprochenen Probleme so weit wie möglich vermeidet. Insbesondere soll ein Verfahren bereitgestellt werden, mit dessen Hilfe die Stickoxidkonzentration in einem Rauchgas, das aus einem brennbaren, aus Biomassebrennstoffen, biogenen Reststoffen bzw. biogenen Abfällen bereitgestellten Gas oder Gasgemisch erzeugt wird, effizient gesenkt werden kann, ohne den Einsatz von teuren Reduktionsmitteln und durch eine vergleichsweise einfache Integration neuer Technologien in eine Gasbrennkammer.

Weiters liegt der Erfindung die Aufgabe zu Grunde eine Vorrichtung und ein System bereitzustellen, mit denen das erfindungsgemäße Verfahren aus- bzw. durchführbar ist.

Gelöst wird diese Aufgabe erfindungsgemäß mit einem Verfahren, das die Merkmale von Anspruch 1 aufweist, sowie einer Vorrichtung, die die Merkmale von Anspruch 7 aufweist und einem System, das die Merkmale von Anspruch 15 aufweist.

Bevorzugte und vorteilhafte Ausführungsformen der Erfindung sind Gegenstand der Unteransprüche.

Erfindungsgemäß ist vorgesehen, dass beim erfindungsgemäßen Verfahren die folgenden in Strömungsrichtung hintereinander stattfindenden Schritte durchlaufen werden. D.h., dass ein Gas oder Gasgemisch, das durch das erfindungsgemäße Verfahren zu einem Rauchgas umgewandelt wird, beim Durchströmen der für das Verfahren genutzten Gasbrennkammer in Strömungsrichtung, die folgenden Schritte durchläuft:
- Einleiten des Gases oder Gasgemisches über den Gaseinlass in die Gasbrennkammer,
- Teilverbrennen des Gases oder Gasgemisches in einer im vorderen Bereich direkt vor dem Hochtemperatur-3-Wege-Katalysator angeordneten ersten Verbrennungszone, bei einem mittels Zufuhr eines Oxidationsmittels auf 0,80 bis 0,99 geregelten Verbrennungsluftverhältnis und einer mittels Kühlung auf 800°C bis 1000°C geregelten Temperatur,
- Reinigen des Gases oder Gasgemisches im Hochtemperatur-3-Wege-Katalysator, wobei insbesondere Stickoxide, Kohlenmonoxid und eventuell im Rauchgas noch enthaltene Kohlenwasserstoffverbindungen katalytisch reduziert werden,
- Nachverbrennen (insbesondere vollständiges Verbrennen) des Gases oder Gasgemisches in einer im hinteren Bereich an den Hochtemperatur-3-Wege-Katalysator anschließenden zweiten Verbrennungszone, bei einem mittels Zufuhr eines Oxidationsmittels auf > 1 geregelten Verbrennungsluftverhältnis und einer Temperatur von > 800°C
- Auslassen des aus dem Gas oder Gasgemisch erzeugten Rauchgases über den Gasauslass aus der Gasbrennkammer.

Erfindungsgemäß wird die der Erfindung zugrunde liegende Aufgabe gelöst, indem der Hochtemperatur-3-Wege-Katalysator in der Gasbrennkammer integriert ist und ein annähernd stöchiometrischer Betrieb des Katalysators durch eine entsprechend gestufte Luftzufuhr und eine darauf abgestimmte Regelung erreicht wird. In der ersten Verbrennungszone der Gasbrennkammer wird das brennbare, teerhaltige Gas unter Zufuhr eines Oxidationsmittels unterstöchiometrisch (d.h. mit einem Verbrennungsluftverhältnis λ < 1) teilverbrannt. Das Verbrennungsluftverhältnis in der ersten Verbrennungszone wird über die Zufuhr des Oxidationsmittels in die erste Zone geregelt.

Das brennbare Gas ist insbesondere ein Gasgemisch, sodass im Rahmen der Erfindung auch von brennbaren Gasen gesprochen werden kann. Es besteht üblicherweise aus CO, H2, CO2, CH4, Wasserdampf, N2, Teeren und anderen Kohlenwasserstoffverbindungen. Das brennbare Gas muss einen sehr niedrigen Staubgehalt aufweisen, damit der 3-Wege-Katalysator nicht verlegt wird.

In der ersten Verbrennungszone der Gasbrennkammer wird das brennbare und teerhaltige Gas unter Zufuhr eines Oxidationsmittels bzw. Oxidationsmittels unterstöchiometrisch (λ < 1) verbrannt. Wichtig ist dabei, dass der Betrieb so erfolgt, dass ein fast vollständiger Abbau der Teere und ein weitgehender Abbau der Kohlenwasserstoffverbindungen durch eine gute Durchmischung des Gases mit dem Oxidationsmittel bei hohen Temperaturen (zwischen 800°C und 1000°C) vor dem Hochtemperatur 3-Wege-Katalysator sichergestellt wird. Das Verbrennungsluftverhältnis λ wird in der ersten Verbrennungszone auf einen Wert zwischen 0,80 (insbesondere 0,85) und 0,99 geregelt.

Die Aufgabe der ersten Verbrennungszone ist es, das Verbrennungsluftverhältnis und die Gastemperatur vor dem Hochtemperatur-3-Wege-Katalysator richtig einzustellen. Die Temperatur liegt zwischen 800 und 1,000°C (je nach Wahl des Hochtemperatur-3-Wege-Katalysators), um die im Gas enthaltenen Teere möglichst vollständig abzubauen (da diese ebenfalls stickstoffhaltige Verbindungen enthalten können), sowie darin das Gas und das Oxidationsmittel gut zu durchmischen, um vor dem Eintritt in den Hochtemperatur-3-Wege-Katalysator eine möglichst homogene Gaszusammensetzung zu erhalten.

Aufgrund der nahe Lambda λ = 1 erfolgenden Teilverbrennung des brennbaren Gases in der ersten Verbrennungszone würden die Gastemperaturen sehr hohe Werte erreichen (deutlich über 1000°C), wenn die Temperatur in der ersten Verbrennungszone nicht aktiv gesenkt werden würde. Um das Betriebstemperaturfenster des Hochtemperatur-3-Wege-Katalysators (zwischen 800°C und 1000°C) einhalten und Regeln zu können, muss diese erste Verbrennungszone eine Kühlung aufweisen.

In dem an die erste Verbrennungszone anschließenden Hochtemperatur-3-Wege-Katalysator erfolgt bei hohen Temperaturen die katalytische Reduktion von stickstoffhaltigen Gaskomponenten (insbesondere Stickoxiden NOx), aber auch in einem gewissen Maße von brennbaren Gaskomponenten wie insbesondere Kohlenmonoxid (CO) und organischen Kohlenwasserstoffen, durch den im Gas noch enthaltenen Restsauerstoff.

Der Hochtemperatur-3-Wege-Katalysator besteht vorzugsweise aus einem Gehäuse, einem Trägerkörper (Substrat), einer Trägerbeschichtung (Washcoat) und einer auf den Washcoat aufgebrachten aktiven katalytischen Beschichtung. Das Gehäuse des Hochtemperatur-3-Wege-Katalysators wird üblicherweise aus Metall oder Keramik gefertigt. Der Träger (Substrat) kann als Wabenkörper, Drahtgewirk, Gitterdraht oder als eine spiralförmig aufgewickelte Metallfolie ausgeführt werden. Der Träger (Substrat) kann auch als keramischer, offenporiger Schaum oder Block ausgeführt werden. Dabei kommen Keramiken (z.B. Mg-Al-Silikat) oder Metalle zum Einsatz. Vorzugsweise werden metallische Wabenkörper oder Drahtgewirke bzw. Gitternetze eingesetzt. Um die aktive Oberfläche des Hochtemperatur-3-Wege-Katalysators weiter zu erhöhen, wird vorzugsweise ein Washcoat auf das Substrat aufgebracht. Washcoats bestehen typischerweise aus Metalloxiden (z.B. Aluminiumoxid) oder keramischen Verbindungen (z.B. Mg-Al-Silikat). Beispielsweise enthalten für die Verwendung in dem erfindungsgemäßen Verfahren geeignete Hochtemperatur-3-Wege-Katalysatoren als katalytisch aktive Komponenten die Edelmetalle Platin und/oder Palladium sowie Rhodium. Die katalytisch aktiven Komponenten werden in Form einer Beschichtung auf den Washcoat aufgebracht, der eine große spezifische Oberfläche aufweist.

Die hohe Betriebstemperatur im Hochtemperatur-3-Wege-Katalysator ist erforderlich, um die im Gas enthaltenen N-haltigen Kohlenwasserstoff- und Teerverbindungen zu reformieren (in niedrigkettige Kohlenwasserstoffe bzw. Permanentgase wie z.B. H₂, CO, CO₂, CH₄, NH₃, HCN bzw. zu elementaren N zu zerlegen). Damit kann einerseits eine Verkokung oder Rußbildung im Hochtemperatur-3-Wege-Katalysator vermieden werden und andererseits können NOx-Vorläufer (wie z.B. NH₃ und HCN) bzw. Stickoxide (NOx, wie NO oder NO2) im Hochtemperatur-3-Wege-Katalysator effizient reformiert werden. Der Betrieb des Hochtemperatur-3-Wege-Katalysator bei einem Verbrennungsluftverhältnis unter 1 ist erforderlich, um sicherzustellen, dass im Gas noch entsprechende Mengen an CO enthalten sind, die als Reduktionmittel zur Reduktion von NOx zu elementarem Stickstoff erforderlich sind. Neben der katalytischen NOx-Reduktion erfolgt im Katalysator auch die Oxidation von Kohlenwasserstoffen und CO zu CO₂, sofern noch gewisse Restkonzentrationen von Oxidationsmedien (insbesondere O₂) im Gas verfügbar sind (das ist normalerweise der Fall, da das brennbare Gas und das Oxidationsmittel nie ideal durchmischt vorliegen).

In der an den 3-Wege-Katalysator anschließenden zweiten Verbrennungszone erfolgt unter Zufuhr eines Oxidationsmittels bzw. -mittels, die überstöchiometrische Verbrennung (d.h. eine Verbrennung bei einem Verbrennungsluftverhältnis von λ > 1) des aus dem Hochtemperatur-3-Wege-Katalysator austretenden, "gereinigten" Gases bzw. der noch brennbaren Komponenten im Gas (insbesondere die Verbrennung von CO). Die zweite Verbrennungszone ist isoliert ausgeführt (d.h. dass die Wände der Gasbrennkammer im Bereich der 2. Verbrennungszone mit einem feuerfesten Material thermisch isoliert sind), um möglichst hohe Temperaturen für den Ausbrand des brennbaren Gases zu erzielen. Die Temperatur in der zweiten Verbrennungszone liegt über 800°C, beispielsweise zwischen 800°C und 1100°C. Das stöchiometrische Luftverhältnis (Verbrennungsluftverhältnis λ) wird durch eine weitere Zufuhr eines Oxidationsmittels in die zweite Verbrennungszone auf > 1, beispielsweise zwischen 1,0 und 1,3, geregelt.

Das durch die gestufte Verbrennung und katalytische Reinigung nur mehr geringe Mengen an Stickoxiden enthaltende und gesäuberte Gas bzw. Gasgemisch wird als Rauchgas aus dem Gasauslass der Gasbrennkammer ausgelassen. Das Rauchgas wird in weiterer Folge entsprechend energetisch genutzt. Das in diesem Zusammenhang erzeugte Rauchgas kann auch als Abgas angesehen bzw. bezeichnet werden.

Die Schritte des erfindungsgemäßen Verfahrens können, sobald das Verfahren gestartet ist, kontinuierlich und parallel zueinander ablaufen, wobei das in die Gasbrennkammer eintretende Gas oder Gasgemisch die einzelnen Schritte (beim Durchströmen der Gasbrennkammer in Strömungsrichtung) hintereinander durchläuft und dadurch beim Durchströmen der Gasbrennkammer in stickoxidarmes Rauchgas umgewandelt wird.

Als Oxidationsmittel (bzw. Oxidationsmedium) wird vorzugsweise Luft, Sauerstoff, rezirkuliertes Rauchgas oder eine Mischung dieser Gase, d.h. z.B. ein Sauerstoff-Luft-Gemisch, verwendet. Vorzugsweise wird in jeder Zone der Gasbrennkammer das gleiche Oxidationsmittel zugeführt, es können aber auch unterschiedliche Oxidationsmedien bzw. ein Oxidationsmittel in unterschiedlichen Konzentrationen zugeführt werden.

Das Oxidationsmittel kann in der ersten Verbrennungszone in Strömungsrichtung gesehen nur am Beginn der ersten Verbrennungszone oder am Beginn und in wenigstens einen in Strömungsrichtung dahinter angeordneten Bereich zugeführt werden. Ebenso kann das Oxidationsmittel in der zweiten Verbrennungszone in Strömungsrichtung gesehen nur am Beginn der zweiten Verbrennungszone oder am Beginn und in wenigstens einen in Strömungsrichtung dahinter angeordneten Bereich zugeführt werden. Eine derart "gestufte" Zufuhr des Oxidationsmittels in der ersten Verbrennungszone oder der zweiten Verbrennungszone kann dabei helfen eine möglichst gute Durchmischung des brennbaren Gases mit dem Oxidationsmittel zu erreichen und kann auch dazu dienen innerhalb der Zonen Unterzonen auszubilden, in denen andere stöchiometrische Verhältnisse als in anderen Bereichen der Zonen vorherrschen.

Vorzugsweise erfolgt die Kühlung in der ersten Verbrennungszone durch eine Wandkühlung oder durch Zufuhr eines Kühlmediums. Besonders bevorzugt erfolgt die Kühlung durch eine Kombination dieser beiden Maßnahmen, um eine "Grundkühlung" mittels der Wandkühlung bereitzustellen und um die "Feinjustierung" der Temperatur über die Menge an zugeführtem Kühlmedium genau einstellen zu können.

Die Wandkühlung erfolgt zum Beispiel durch Wärmeaustausch (Wärmeleitung, Wärmestrahlung und/oder Wärmeströmung) mit dem der zweiten Verbrennungszone zuzuführenden Oxidationsmittel. Dafür strömt das Oxidationsmittel für die zweite Verbrennungszone insbesondere durch eine oder mehrere Leitung/en bzw. Kammer/n, die für einen Wärmeaustausch mit der ersten Verbrennungszone eingerichtet sind, d.h. die vorzugsweise in Kontakt mit der Wand der Gasbrennkammer in der ersten Verbrennungszone steht/stehen oder im Bereich der Wand der Gasbrennkammer angeordnet sind. Eine Wandkühlung kann auch über einen Wärmeaustausch zwischen Wänden der Brennkammer und Wänden, die die Brennkammer umgeben, erfolgen (insbesondere über Wärmestrahlung). Die die Brennkammer umgebenden Wände können auch wassergekühlt sein.

Als Kühlmedium wird vorzugsweise rezirkuliertes gekühltes Rauchgas, d.h. Rauchgas das im erfindungsgemäßen Verfahren hergestellt wurde, bereits energetisch genutzt wurde (wodurch es Wärme abgegeben hat) und zurückgeleitet wird, oder Dampf (der insbesondere durch das im erfindungsgemäßen Verfahren erzeugte Rauchgas erzeugt wurde) verwendet.

Bei Durchführungsformen des erfindungsgemäßen Verfahrens, bei denen ein Kühlmedium der ersten Zone zugeführt wird, wird das Kühlmedium in der ersten Verbrennungszone vorzugsweise in Strömungsrichtung gesehen hinter dem Oxidationsmittel zugeführt. Wenn das Oxidationsmittel in mehreren Bereichen zugeführt wird, wird das Kühlmedium vorzugsweise nach dem in Strömungsrichtung gesehen hintersten (d.h. dem am nächsten beim Hochtemperatur-3-Wege-Katalysator liegenden) Bereich zugeführt.

Bevorzugt ist es, wenn das Oxidationsmittel in der ersten Verbrennungszone über Düsen oder Düsenringe oder Düsenlanzen und/oder das Oxidationsmittel in der zweiten Verbrennungszone über Düsen oder Düsenringe oder Düsenlanzen und/oder ggf. das Kühlmedium in der ersten Verbrennungszone über Düsen oder Düsenringe oder Düsenlanzen zugeführt wird. Denkbar sind auch Kombinationen von unterschiedlichen Arten der Zufuhr in die verschiedenen Zonen bzw. innerhalb einer Zone. Vorzugsweise erfolgt die Zufuhr dieser Medien mittels Einblasung über Düsen, die derart (z.B. ringförmig) angeordnet und ausgerichtet sind, dass eine möglichst gute Durchmischung des brennbaren Gases mit diesen Medien sichergestellt wird (z.B. durch Ausbildung einer Rotationsströmung).

Im Rahmen der Erfindung kann das Oxidationsmittel in die zweite Verbrennungszone bei Umgebungstemperatur oder vorgewärmt zugeführt werden. Möglich ist auch, dass das Oxidationsmittel abwechselnd bei Umgebungstemperatur oder vorgewärmt zugeführt wird, um die Temperatur in der zweiten Verbrennungszone zu regeln, damit sie jedenfalls > 800°C ist oder innerhalb eines bestimmten Temperaturbereichs liegt.

Das Vorwärmen des Oxidationsmittels für die zweite Verbrennungsstufe, auf eine Temperatur oberhalb der Umgebungstemperatur, erfolgt vorzugsweise durch einen stromabwärts der Gasbrennkammer angeordneten Abgaswärmetauscher, durch Wärmeaustausch mit den Wänden der ersten Verbrennungszone und/oder durch eine externe Vorwärmvorrichtung, z.B. elektrisch.

Insbesondere kann eine Kühlung der ersten Verbrennungszone und ein Vorwärmen des Oxidationsmittels für die zweite Verbrennungszone erfolgen, indem das Oxidationsmittel für die zweite Verbrennungszone durch wenigstens eine Leitung oder Kammer (einer Wandkühlung), die vorzugsweise mit der Wand der Gasbrennkammer in der ersten Verbrennungszone in Kontakt steht, geleitet wird und dabei in der ersten Verbrennungszone vorhandene Wärme aufnimmt.

Wie die Wände der Gasbrennkammer im hinteren Bereich können auch die Wände der Gasbrennkammer im vorderen Bereich (zumindest teilweise) thermisch isoliert sein, insbesondere mit einem feuerfesten Material. Auch der Hochtemperatur-3-Wege-Katalysator kann thermisch isoliert ausgeführt sein, um die Temperatur darin möglichst konstant zu halten. Als isolierendes insbesondere feuerfestes Material kann bei den Bereichen bzw. dem Hochtemperatur-3-Wege-Katalysator beispielsweise Keramik- oder Steinwolle eingesetzt werden.

Vorzugsweise wird die Kühlung und somit die Temperatur in der ersten Verbrennungszone mittels einer Steuerung geregelt. Die Steuerung bezieht dafür Informationen (hinsichtlich der Temperatur in der ersten Verbrennungszone) von wenigstens einem in oder an der ersten Verbrennungszone, insbesondere direkt vor dem Hochtemperatur-3-Wege-Katalysator, angeordneten und/oder wenigstens einem in oder an dem Hochtemperatur-3-Wege-Katalysator angeordneten Temperatursensor. Der/die Temperatursensoren kann/können ein kalibriertes Thermoelement bzw. kalibrierte Thermoelemente sein, aber auch andere denkbare Sensoren, mit denen die Temperatur in der ersten Verbrennungszone (direkt oder auch indirekt) gemessen werden kann. Beispielsweise wird die in die erste Verbrennungszone zugeführte Menge an rezirkuliertem Abgas und/oder Dampf in Abhängigkeit von der Gastemperatur in der ersten Verbrennungszone geregelt.

Ebenso ist es bevorzugt, wenn die Zufuhr des Oxidationsmittels und somit das Verbrennungsluftverhältnis in der ersten Verbrennungszone mittels einer Steuerung geregelt wird. Die Steuerung bezieht dafür Informationen von wenigstens einer den Sauerstoffgehalt der ersten Verbrennungszone messenden ersten Sauerstoffmesseinrichtung. Diese Sauerstoffmesseinrichtung kann eine (insbesondere gekühlte) Lambdasonde, Lasermesseinrichtung, und/oder extraktiven Rauchgasmesseinrichtung sein. Die Menge des zugeführten Oxidationsmittels und damit das stöchiometrische Luftverhältnis in der ersten Verbrennungszone wird dann in Abhängigkeit vom Luftverhältnis im brennbaren Gas in der ersten Verbrennungszone geregelt. Zusätzlich oder stattdessen können auch Informationen über eine den Stickoxidgehalt des aus dem Gasauslass austretenden Rauchgases messende Rauchgasmesseinrichtung an die Steuerung geleitet werden, da sich das Verbrennungsluftverhältnis in der ersten Verbrennungszone über die gemessene Konzentration von Stickoxiden(NOx) im Rauchgas bzw. Abgas regeln lässt. In diesem Fall ist es möglich die Konzentration an Stickoxiden (NOx) im Rauchgas regelungstechnisch online zu überwachen und zu minimieren (über eine Minimierungsfunktion, die die StickoxidKonzentration im Rauchgas in ein Verhältnis zum Verbrennungsluftverhältnis vor dem Hochtemperatur-3-Wege-Katalysator setzt).

Auch das Verbrennungsluftverhältnis in der zweiten Verbrennungszone (bzw. auch in anderen Zonen der Gasbrennkammer) kann mittels der Steuerung (oder einer anderen Steuerung) geregelt werden, wofür der Sauerstoffgehalt in dieser Zone (bzw. diesen Zonen) über eine zweite Sauerstoffmesseinrichtung, z.B. eine Lambdasonde, Lasermesseinrichtung, und/oder extraktiven Rauchgasmesseinrichtung, ermittelt werden kann, oder über eine Rauchgasmesseinrichtung, die den Sauerstoffgehalt des aus dem Gasauslass austretenden Rauchgases misst.

Insbesondere kann die Regelung der Temperatur und die Regelung des Verbrennungsluftverhältnisses in der ersten Verbrennungszone (bzw. in mehreren oder allen Zonen) von ein und derselben Steuerung vorgenommen werden.

Im Rahmen der Erfindung kann vorgesehen sein, dass in einer im vorderen Bereich und in Strömungsrichtung vor der ersten Verbrennungszone angeordneten Vorreformationszone ein Vorverbrennen des brennbaren Gases oder Gasgemisches, das durch den Gaseinlass in die Gasbrennkammer geleitet wird, stattfindet. Das Verbrennungsluftverhältnis ist in dieser Vorreformationszone mittels Zufuhr eines Oxidationsmittels auf < 0,60, vorzugsweise < 0,50, geregelt. In der Vorreformationszone erfolgt eine Vorreformation bzw. Vorkonversion des Gases hinsichtlich eines Teerabbaus und einer primären Entstickung (d.h. ein Vorabbau von HCN und NH₃) .

Die Vorreformationszone kann im Rahmen der Erfindung auch als eine am Beginn der ersten Verbrennungszone angeordnete Unterzone der ersten Verbrennungszone angesehen werden, wenn die erste Verbrennungszone zu Beginn (d.h. in der Vorreformationszone) und in wenigstens einen in Strömungsrichtung nachfolgenden Bereich (d.h. außerhalb der Vorreformationszone) eine Zufuhr für ein Oxidationsmittel aufweist.

Das in den Gaseinlass eingeleitete Gas oder Gasgemisch stammt vorzugsweise aus einer, insbesondere direkt mit dem Gaseinlass verbundenen bzw. gekoppelten, Anlage zur Erzeugung von brennbaren Gasen mit einem Staubgehalt von < 100 mg/Nm3, insbesondere < 20 mg/Nm3. Diese Anlage zur Erzeugung von staubarmen, brennbaren Gasen kann z.B. ein Gegenstromvergasungsreaktor, ein Festbettreaktor oder ein Gegenstrompyrolysereaktor sein. Aus diesen Konversionsreaktoren austretende brennbare Gase weisen eine sehr geringe Geschwindigkeit auf und tragen daher kaum Staubpartikel aus. Weiters wirkt auch das Brennstoffbett selbst als Filter, sodass derartige Anlagen besonders staubarme Gase bereitstellen.

In einer möglichen Durchführungsform des Verfahrens findet in einem im hinteren Bereich und in Strömungsrichtung nach der zweiten Verbrennungszone oder anschließend an den Gasauslass angeordneten Oxidationskatalysator ein weiteres Reinigen des Gases statt. Dabei werden insbesondere Kohlenmonoxid und Kohlenwasserstoffe katalytisch reduziert. Ein derartiger Oxidationskatalysator reduziert die Baulänge der zweiten Verbrennungszone und verbessert den Ausbrand des zu Rauchgas ausgebrannten Gases hinsichtlich einer Reduktion von Kohlenmonoxid, Teeren und Ruß insbesondere bei Teillastbetrieb der Vorrichtung (bzw. der mit der Vorrichtung verbundenen Anlage zur Bereitstellung des Gases). Der verwendete Oxidationskatalysator kann von herkömmlicher Bauart sein, wobei geeignete Oxidationskatalysatoren für die Verwendung in dem erfindungsgemäßen Verfahren insbesondere solche sind, die als katalytisch aktive Komponenten die Edelmetalle Platin und/oder Palladium enthalten. Der Oxidationskatalysator kann thermisch isoliert (mit z.B. Keramik- oder Steinwolle) ausgeführt werden, um die Temperaturen im Oxidationskatalysator möglichst konstant zu halten.

Im Rahmen des erfindungsgemäßen Verfahrens kann vorgesehen sein, dass der Hochtemperatur-3-Wege-Katalysator vor, nach oder während dem Verfahren manuell oder automatisch abgereinigt wird. Dafür ist insbesondere eine an oder in der Gasbrennkammer angeordnete Abreinigungseinrichtung vorgesehen. Zum Beispiel wird der Hochtemperatur-3-Wege-Katalysator mit einer oder mehreren in die Gasbrennkammer eingebrachten Düsenlanzen, deren Spitze jeweils mit einer Düsenreihe versehen ist, periodisch abgereinigt, um einen störungsfreien und kontinuierlichen Betrieb sicher zu stellen. Zum Abreinigen blasen eine oder mehrere Düsen den Hochtemperatur-3-Wege-Katalysator z.B. mittels Druckluft oder Dampf in regelmäßigen Abständen ab und befreien dadurch den Hochtemperatur-3-Wege-Katalysator von möglichen Ablagerungen.

Vorteile zu bestimmten Merkmalen des erfindungsgemäßen Verfahrens bzw. zum erfindungsgemäßen Verfahren beschriebene konstruktive (bzw. funktionelle) Merkmale, lassen sich in analoger Weise auch auf die erfindungsgemäße Vorrichtung umlegen und vice versa. In Folge wird auf bereist beschriebene Merkmale nicht oder nur in sehr gekürzter Form eingegangen.

Die erfindungsgemäße Vorrichtung ist insbesondere zur Durchführung des erfindungsgemäßen Verfahrens (bzw. einer beliebigen, im Rahmen dieser Erfindung beschriebenen, Durchführungsform des erfindungsgemäßen Verfahrens) geeignet und das erfindungsgemäße Verfahren wird insbesondere mit oder in einer erfindungsgemäßen Vorrichtung (bzw. einer beliebigen im Rahmen dieser Erfindung beschriebenen Ausführungsform der erfindungsgemäßen Vorrichtung) aus- bzw. durchgeführt.

Bei der erfindungsgemäßen Vorrichtung ist vorgesehen, dass die Gasbrennkammer durch einen integrierten Hochtemperatur-3-Wege-Katalysator, insbesondere zur katalytischen Reduktion von Stickoxiden und Kohlenmonoxid, in einen in Strömungsrichtung gesehenen vorderen Bereich und einen in Strömungsrichtung gesehenen hinteren Bereich mit thermisch isolierten Wänden aufgeteilt wird, dass im vorderen Bereich, direkt vor dem Hochtemperatur-3-Wege-Katalysator, eine erste Verbrennungszone ausgebildet ist, die wenigstens eine Kühleinrichtung und eine erste Oxidationsmittelzuführung aufweist, und dass im hinteren Bereich an den Hochtemperatur-3-Wege-Katalysator anschließend ein zweite Verbrennungszone ausgebildet ist, die eine zweite Oxidationsmittelzuführung aufweist.

Die Gasbrennkammer kann vertikal, horizontal oder auch schräg ausgeführt sein. Sie hat vorzugsweise einen runden Querschnitt, sie kann aber auch eine andere Querschnittsform haben (z.B. oval oder eckig). Sie kann weiters, in einer Achse durchgehend gebaut sein oder sich auch über zwei oder drei Achsen erstrecken (mit wenigstens einer Umlenkung - z.B. nach dem Hochtemperatur-3-Wege-Katalysator).

Im Rahmen der Erfindung kann die erste Oxidationsmittelzuführung in Strömungsrichtung gesehen am Beginn der ersten Verbrennungszone oder am Beginn und in wenigstens einem in Strömungsrichtung dahinter angeordneten Bereich der ersten Verbrennungszone wenigstens einen in die Gasbrennkammer mündenden Oxidationsmitteleinlass aufweisen. Ebenso kann die zweite Oxidationsmittelzuführung in Strömungsrichtung gesehen am Beginn der zweiten Verbrennungszone oder am Beginn und in wenigstens einem in Strömungsrichtung dahinter angeordneten Bereich der zweiten Verbrennungszone wenigstens einen in die Gasbrennkammer mündenden Oxidationsmitteleinlass aufweisen. Der Oxidationsmitteleinlass bzw. jeder der Oxidationsmitteleinlässe der ersten Verbrennungszone und/oder der zweiten Verbrennungszone kann/können wie bereits zur Zufuhr des Oxidationsmittels beim Verfahren beschrieben eine Düse oder ein Düsenring oder eine Düsenlanze sein.

Vorzugsweise weist die erste Verbrennungszone als Kühleinrichtung eine Wandkühlung und/oder eine Kühlmediumszuführung auf. Die Wandkühlung kann zum Beispiel eine Leitung oder Kammer aufweisen, die insbesondere in Kontakt mit der Wand der Gasbrennkammer in der ersten Verbrennungszone steht und die Teil der zweiten Oxidationsmittelzuführung ist. Ebenso kann ein Wärmetauscher vorgesehen sein, bei dem Wärme zwischen der Wand der Gasbrennkammer in der ersten Verbrennungszone und der mit dem Oxidationsmittel durchströmten Leitung oder Kammer (oder einer anderen Zufuhr eines kühleren Mediums) ausgetauscht wird. Die Wandkühlung kann auch derart eingerichtet sein, dass zwischen den Wänden der Brennkammer und den die Brennkammer umgebenden Wänden eine Wärmeübertragung (d.h. ein Wärmeaustausch) erfolgt (z.B. mittels Wärmestrahlung und/oder einer Kombination aus Wärmestrahlung und Konvektion). Diese die Brennkammer umgebenden Wände können (auch) wassergekühlt sein. Falls zusätzlich oder stattdessen eine Kühlmediumszuführung vorhanden ist, ist diese insbesondere mit einer nach dem Gasauslass angeordneten Entnahmeeinrichtung von rezirkuliertem gekühltem Rauchgas oder Dampf verbunden. Auch der Kühlmediumseinlass oder ggf. die Kühlmediumseinlässe kann/können wie bereits zur Zufuhr des Kühlmediums beim Verfahren beschrieben eine Düse oder ein Düsenring oder eine Düsenlanze sein.

Im Rahmen der Erfindung sind Ausführungsformen denkbar, bei denen die Oxidationsmittelzuführung der zweiten Verbrennungszone mit einem stromabwärts der Gasbrennkammer angeordneten Abgaswärmetauscher und/oder mit einer externen, z.B. elektrischen, Vorwärmevorrichtung verbunden ist. Zusätzlich dazu oder stattdessen kann die zweite Oxidationsmittelzuführung wenigstens eine Leitung oder Kammer aufweisen, die vorzugsweise in Kontakt mit der Wand der Gasbrennkammer in der ersten Verbrennungszone steht (d.h. die ein Bestandteil einer Wandkühlung der ersten Verbrennungszone ist). Das Oxidationsmittel für die zweite Verbrennungszone kann dadurch (bei Bedarf) vorgewärmt zugeführt werden, z.B. um die Temperatur in der zweiten Verbrennungszone zu erhöhen oder auf einem ausreichend hohen Niveau zu halten.

Die Wände der Gasbrennkammer können im vorderen Bereich zumindest teilweise thermisch isoliert sein, insbesondere mit einem feuerfesten Material wie Steinwolle, Keramikwolle, Schamott, etc. Auch der Hochtemperatur-3-Wege-Katalysator kann derart oder mit anderen Materialien thermisch isoliert sein.

Vorzugsweise weist die Vorrichtung eine Steuerung zum Regeln der Kühleinrichtung/en und somit der Temperatur in der ersten Verbrennungszone und/oder zum Regeln des Mediumsstroms durch die erste Oxidationsmittelzuführung und somit des Verbrennungsluftverhältnisses in der ersten Verbrennungszone auf. Für diese Regelungen können auch separate Steuerungen vorgesehen sein.

Für die Temperaturregelung kann die Steuerung mit wenigstens einem in oder an der ersten Verbrennungszone, insbesondere direkt vor dem Hochtemperatur-3-Wege-Katalysator, angeordneten und/oder wenigstens einem in oder an dem Hochtemperatur-3-Wege-Katalysator angeordneten Temperatursensor verbunden sein. Der bzw. die Temperatursensor/en kann/können z.B. ein Thermoelement bzw. Thermoelemente sein.

Für die Regelung des Verbrennungsluftverhältnisses kann die Steuerung mit wenigstens einer den Sauerstoffgehalt der ersten Verbrennungszone messenden Sauerstoffmesseinrichtung, insbesondere einer Lambdasonde, einer Lasermessvorrichtung, oder einer extraktiven Rauchgasmesseinrichtung verbunden sein, und/oder mit einer den Stickoxidgehalt des aus dem Gasauslass austretenden Rauchgases messenden Rauchgasmesseinrichtung.

Im Rahmen der Erfindung kann die Gasbrennkammer im vorderen Bereich eine in Strömungsrichtung vor der ersten Verbrennungszone angeordnete Vorreformationszone mit einer weiteren Oxidationsmittelzuführung aufweisen. Die Vorrichtung kann eine Steuerung zum Regeln des Verbrennungsluftverhältnisses in der Vorreformationszone aufweisen. Das Regeln des Verbrennungsluftverhältnisses in der Vorreformationszone kann auch (falls vorhanden) von der Steuerung zum Regeln des Verbrennungsluftverhältnisses in der ersten Verbrennungszone übernommen werden.

Möglich ist im Rahmen der Erfindung, dass die Gasbrennkammer im hinteren Bereich einen in Strömungsrichtung nach der zweiten Verbrennungszone angeordneten Oxidationskatalysator, insbesondere zur katalytischen Reduktion von Kohlenmonoxid und Kohlenwasserstoffen, aufweist. Der Oxidationskatalysator kann auch außerhalb der Gasbrennkammer angeordnet und an den Gasauslass der Gasbrennkammer angeschlossen sein. Der Oxidationskatalysator kann ein herkömmlicher Oxidationskatalysator mit den bereits beschrieben Merkmalen sein.

Vorzugsweise weist die Vorrichtung eine Abreinigungseinrichtung zur Abreinigung des Hochtemperatur-3-Wege-Katalysators auf. Diese Abreinigungseinrichtung kann aus wenigstens einer Düse oder Düsenlanze bestehen oder zumindest eine Düse oder Düsenlanze aufweisen. Durch Eindüsen von Druckluft oder Dampf über die Abreinigungseinrichtung in den Hochtemperatur-3-Wege-Katalysators bzw. auf dessen Oberfläche kann die Oberfläche bzw. können die Kanäle des Hochtemperatur-3-Wege-Katalysators, vorzugsweise periodisch, von Staub befreit werden. Sowohl die Effektivität als auch die Lebenserwartung des Hochtemperatur-3-Wege-Katalysators wird dadurch erhöht. Die Abreinigungseinrichtung kann auch über die Messung des Differenzdruckes über den Hochtemperatur-3-Wege-Katalysator geregelt werden, indem sie bei einem bestimmten als kritisch definierten Differenzdruck ausgelöst wird. Dafür kann ein Differenzdrucksensor, der die Druckdifferenz über den Hochtemperatur-3-Wege-Katalysator misst, vorgesehen (und im, am oder im Bereich des Hochtemperatur-3-Wege-Katalysator/s angeordnet) sein.

Erfindungsgemäß ist auch ein System (bzw. eine Installation oder eine Betriebsanlage) zur Erzeugung eines Rauchgases aus festen Biomassebrennstoffen, biogenen Reststoffen und/oder biogenen Abfällen vorgesehen. Das System weist eine Anlage zur Erzeugung eines brennbaren Gases oder Gasgemisches aus festen Biomassebrennstoffen, biogenen Reststoffen und/oder biogenen Abfällen auf, die vorzugsweise ein Gegenstromvergasungsreaktor, ein Festbettreaktor oder ein Gegenstrompyrolysereaktor ist. Diese Anlage ist dazu eingerichtet brennbares Gas mit einem Staubgehalt von < 100 mg/Nm3, insbesondere < 20 mg/Nm3, bereitzustellen. Dieses brennbare und staubarme Gas wird in eine mit der Anlage verbundene erfindungsgemäße Vorrichtung zur Erzeugung eines Rauchgases eingeleitet. Da das mit der Anlage erzeugte Gas sehr staubarm ist, arbeitet der Hochtemperatur-3-Wege-Katalysator in der Vorrichtung besonders effektiv, sodass ein besonders gut gereinigtes (insbesondere entsticktes) Rauchgas erzeugt werden kann.

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind. Es zeigt:
- Fig. 1: eine schematische Darstellung einer ersten Ausführungsform der erfindungsgemäßen Vorrichtung in einem Längsschnitt,
- Fig. 2: eine schematische Darstellung einer zweiten Ausführungsform der erfindungsgemäßen Vorrichtung in einem Längsschnitt
- Fig. 3: eine schematische Darstellung einer dritten Ausführungsform der erfindungsgemäßen Vorrichtung in einem Längsschnitt,
- Fig. 4: eine schematische Darstellung einer vierten Ausführungsform der erfindungsgemäßen Vorrichtung in einem Längsschnitt, und
- Fig. 5: eine schematische Darstellung einer fünften Ausführungsform der erfindungsgemäßen Vorrichtung in einem Längsschnitt.

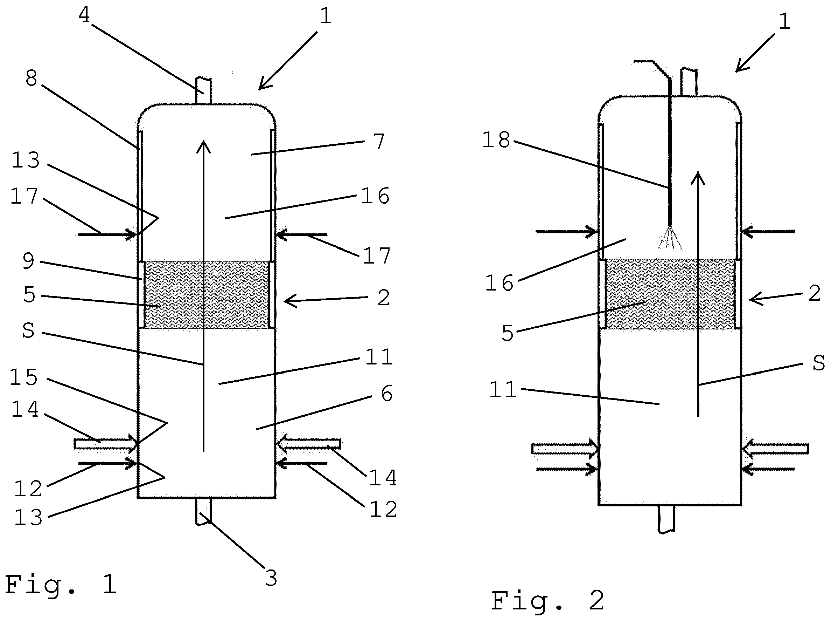

Fig. 1 zeigt eine erste Ausführungsform der erfindungsgemäßen Vorrichtung 1 in einer stark vereinfachten Schnittansicht entlang einer Längserstreckung der Vorrichtung 1.

Die Vorrichtung 1 weist eine längsgestreckte Gasbrennkammer 2 auf. Die Gasbrennkammer 2 hat an einem Ende einen Gaseinlass 3, zum Einleiten von brennbarem Gas in das Innere der Gasbrennkammer 2, und am anderen Ende einen Gasauslass 4, zum Auslassen von Gas, das die Gasbrennkammer 2 in Strömungsrichtung S durchquert hat.

Die Gasbrennkammer 2 wird durch einen in der Gasbrennkammer 2 integrierten Hochtemperatur-3-Wege-Katalysator 5 in zwei Bereiche 6, 7 geteilt. Der in Strömungsrichtung S gesehen vordere Bereich 6 ist zwischen dem Gaseinlass 3 und dem Hochtemperatur-3-Wege-Katalysator 5 angeordnet und der in Strömungsrichtung S gesehen hintere Bereich 7 ist zwischen dem Hochtemperatur-3-Wege-Katalysator 5 und dem Gasauslass 4 angeordnet.

Der hintere Bereich 7 weist thermisch isolierte Wände 8 auf, wobei die thermische Isolierung beispielsweise durch innen an den Wänden 8 angebrachtes, feuerfestes Material, wie Steinwolle oder Schamott, gebildet ist.

In der dargestellten Ausführungsform ist auch der Hochtemperatur-3-Wege-Katalysator 5 thermisch isoliert, was schematisch durch eine Katalysatorisolierung 9 dargestellt ist.

Im vorderen Bereich 6 ist eine erste Verbrennungszone 11 gebildet.

Die erste Verbrennungszone 11 weist gleich an ihrem Beginn (d.h. in ihrem in Strömungsrichtung S gesehen vordersten Bereich) eine erste Oxidationsmittelzuführung 12, zur Zufuhr eines Oxidationsmittels in die erste Verbrennungszone 11, auf.

Die erste Oxidationsmittelzuführung 12 weist mehrere Oxidationsmitteleinlässe 13 auf, die in das Innere der Gasbrennkammer 2 münden, und beispielsweise als umfangsseitig in einem Ring angeordnete Düsen ausgeführt sind.

Die erste Verbrennungszone 11 weist eine Kühleinrichtung in Form einer Kühlmediumszuführung 14, zur Zufuhr eines Kühlmediums in die erste Verbrennungszone 12, auf, die der Kühlung der ersten Verbrennungszone 11 (bzw. des darin befindlichen Gases oder Gasgemisches) dient.

Die Kühlmediumszuführung 14 weist mehre Kühlmediumseinlässe 15 auf, die in Strömungsrichtung S gesehen hinter den Oxidationsmitteleinlässen 13 der ersten Oxidationsmittelzuführung 12 angeordnet sind, sodass die Zufuhr des Kühlmediums in Strömungsrichtung S gesehen hinter der Zufuhr des Oxidationsmittels erfolgt.

Im hinteren Bereich 7 ist eine zweite Verbrennungszone 16 gebildet. Die zweite Verbrennungszone 16 weist eine zweite Oxidationsmittelzuführung 17 auf, die ebenfalls mehrere Oxidationsmitteleinlässe 13 für die Zufuhr eines Oxidationsmittels in die zweite Verbrennungszone 16 aufweist.

Die Fig. 2 bis 5 zeigen weitere Ausführungsformen der erfindungsgemäßen Vorrichtung 1, wobei in Folge im Detail auf die Unterschiede zwischen diesen Ausführungsformen und der in Fig. 1 dargestellten Ausführungsform eingegangen wird. Es versteht sich, dass die Merkmale der unterschiedlichen Ausführungsformen im Rahmen der Erfindung im Wesentlichen beliebig miteinander kombiniert werden können, um weitere nicht dargestellte Ausführungsformen der erfindungsgemäßen Vorrichtung 1 zu erhalten.

Die erfindungsgemäße Vorrichtung 1 gemäß der in Fig. 2 dargestellten zweiten Ausführungsform weist eine Abreinigungseinrichtung 18 zum Abreinigen des Hochtemperatur-3-Wege-Katalysators 5 auf. Die Abreinigungseinrichtung 18 weist die Form einer Düsenlanze auf, über die Druckluft oder Dampf auf bzw. in den Hochtemperatur-3-Wege-Katalysator 5 gedüst (geblasen) wird, um diesen von darauf abgelagertem Staub zu befreien. Die Abreinigungseinrichtung 18 in Form der Düsenlanze kann automatisch (z.B. in vorbestimmten Zeitabständen) oder manuell aktivierbar sein.

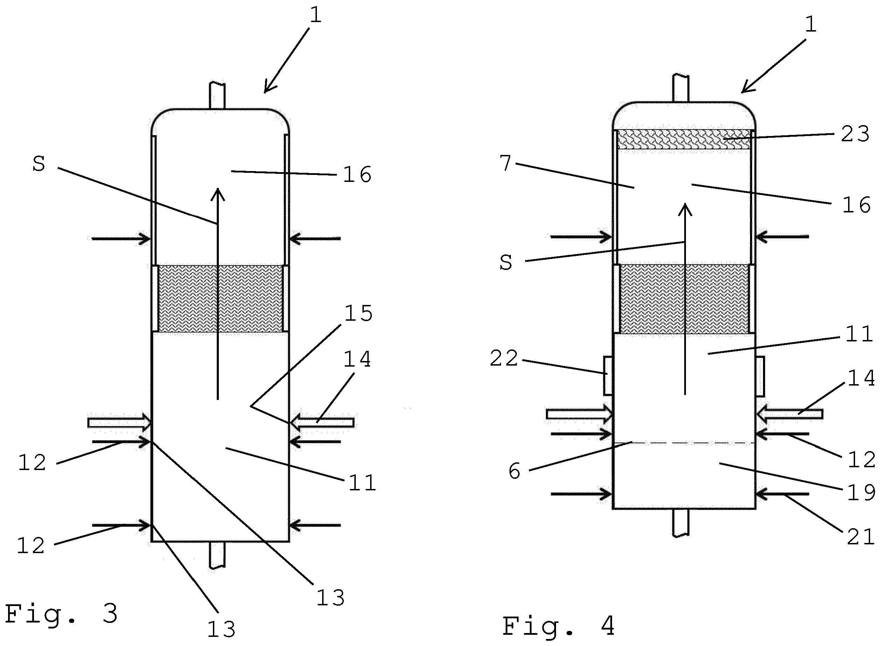

Fig. 3 zeigt eine dritte Ausführungsform der erfindungsgemäßen Vorrichtung 1, bei der die erste Oxidationsmittelzuführung 12 in Strömungsrichtung S gesehen am Beginn der ersten Verbrennungszone 11 und in wenigstens einem in Strömungsrichtung S dahinter angeordneten Bereich der ersten Verbrennungszone 11 die in die Gasbrennkammer 2 mündenden Oxidationsmitteleinlässe 13 aufweist. Dadurch kann eine Zufuhr des Oxidationsmittels an mehreren in Strömungsrichtung S gesehen hintereinander angeordneten Bereichen bzw. an mehreren Stellen der ersten Verbrennungszone 11 erfolgen. Die Oxidationsmitteleinlässe 13 der ersten Oxidationsmittelzuführung 12 können aus der gleichen oder aus unterschiedlichen Quellen mit Oxidationsmittel gespeist sein, und alle das selbe Oxidationsmittel oder unterschiedliche Oxidationsmedien (bzw. das gleiche Oxidationsmittel in unterschiedlicher Konzentration) zuführen.

Die Zufuhr des Kühlmediums erfolgt in der ersten Verbrennungszone 11 hinter der Zufuhr des Oxidationsmittels, da die Kühlmediumseinlässe 15 in Strömungsrichtung S gesehen hinter den hintersten Oxidationsmitteleinlässen 13 angeordnet sind.

Die in Fig. 4 gezeigte vierte Ausführungsform der erfindungsgemäßen Vorrichtung 1 weist mehrere Unterschiede zu der in Fig. 1 dargestellten Ausführungsform auf. Zum ersten ist im vorderen Bereich 6 der Gasbrennkammer 2, in Strömungsrichtung S gesehen vor der ersten Verbrennungszone 11, eine Vorreformationszone 19 angeordnet. Diese Vorreformationszone 19 weist eine weitere Oxidationsmittelzuführung 21 auf, die der Zufuhr eines Oxidationsmittels in die Vorreformationszone 19 dient.

Weiters weist die erste Verbrennungszone 11 neben der als Kühleinrichtung dienenden Kühlmediumszuführung 14 als weitere Kühleinrichtung noch eine Wandkühlung 22 auf. Die Wandkühlung 22 dient ebenfalls der Kühlung der ersten Verbrennungszone 11 (bzw. des darin befindlichen Gases oder Gasgemisches).

Zusätzlich dazu weist die Gasbrennkammer 2 der in Fig. 4 dargestellten erfindungsgemäßen Vorrichtung 1 im hinteren Bereich 7 ein in Strömungsrichtung S nach der zweiten Verbrennungszone 16 angeordneten Oxidationskatalysator 23 auf.

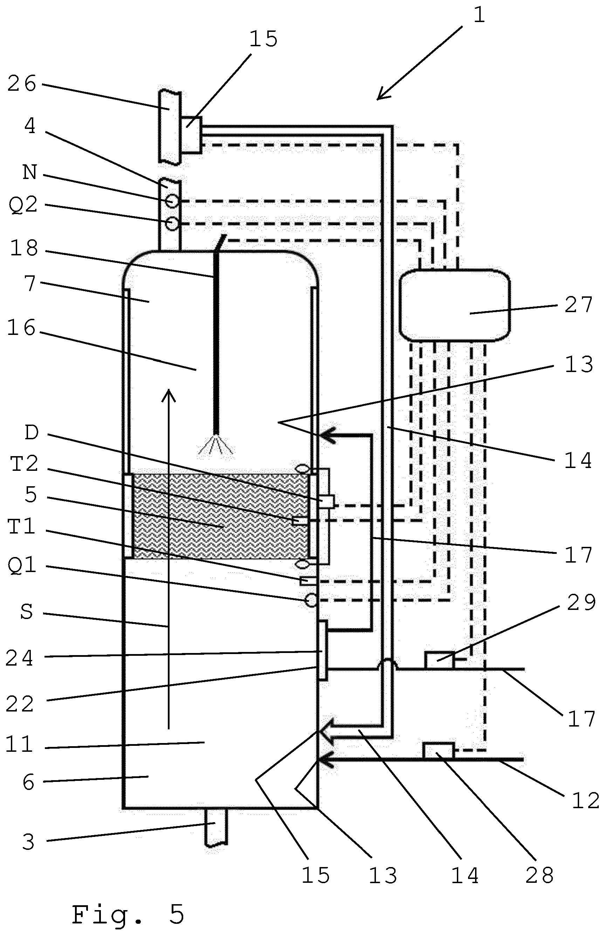

Die in Fig. 5 dargestellte, fünfte Ausführungsform der erfindungsgemäßen Vorrichtung 1 weist, wie die in Fig. 4 dargestellte Ausführungsform, in der ersten Verbrennungszone 11 eine Wandkühlung 22 auf.

Die Wandkühlung 22 weist wenigstens eine Leitung oder Kammer 24 auf, die in Kontakt mit der Wand der Gasbrennkammer 2 in der ersten Verbrennungszone 11 steht (und somit einen Wärmeübergang bzw. Wärmeaustausch bedingt) und Teil der zweiten Oxidationsmittelzuführung 17 ist. Das über die zweite Oxidationsmittelzuführung 17 der zweiten Verbrennungszone 16 zugeführte Oxidationsmittel wird vor Einlass in die zweite Verbrennungszone 16 durch die Wandkühlung 22 der ersten Verbrennungszone 11 geleitet und nimmt dabei Wärme aus der ersten Verbrennungszone 11 (bzw. des darin befindlichen Gases oder Gasgemisches) auf.

Eine Entnahmeeinrichtung 25, die von einer in Strömungsrichtung S nach dem Gasauslass 4 angeordneten weiterführenden Leitung 26 gekühltes Rauchgas entnimmt, speist in der dargestellten Ausführungsform die Kühlmediumszuführung 14 der ersten Verbrennungszone 11. Das der ersten Verbrennungszone 11 zuführbare Kühlmedium ist somit ein Teil des Rauchgases nach seiner energetischen Verwertung bzw. ein durch die energetische Verwertung des Rauchgases erzeugter Dampf.

Weiters ist in Fig. 5 schematisch eine Steuerung 27 (bzw. eine Steuereinheit, eine Steuereinrichtung, ein Steuercomputer, etc.) der Vorrichtung 1 dargestellt, die mit unterschiedlichen Komponenten der Vorrichtung 1 verbunden ist und diese ansteuert bzw. regelt.

Die Steuerung 27 bezieht dafür Informationen von mehreren in oder an der Gasbrennkammer 2 und/oder in, an oder nach dem Gasauslass 4 angeordneten Sensoren bzw. Messeinrichtungen.

In der dargestellten Ausführungsform ist in oder an der ersten Verbrennungszone 11 eine erste Sauerstoffmesseinrichtung Q1 angeordnet, die den Sauerstoffgehalt in der ersten Verbrennungszone 11 misst und diese Informationen an die damit verbundene Steuerung 27 weitergibt. Diese erste Sauerstoffmesseinrichtung Q1 kann beispielsweise eine (insbesondere gekühlte) Lambdasonde, eine Lasermesseinrichtung oder eine extraktive Rauchgasmesseinrichtung sein.

Aufgrund der Informationen über den Sauerstoffgehalt in der ersten Verbrennungszone 11, steuert die Steuerung 27 die Zufuhr des Oxidationsmittels in die erste Verbrennungszone 11. In der dargestellten Ausführungsform wird dafür der Mediumsstrom des Oxidationsmittels durch die erste Oxidationsmittelzuführung 12 über eine mit der Steuerung 27 verbundene erste Oxidationsmittelquelle 28 geregelt. Die Steuerung 27 regelt dadurch das Verbrennungsluftverhältnis λ in der ersten Verbrennungszone 11 auf einen Wert zwischen 0,8 und 0,99.

Der Sauerstoffgehalt in der zweiten Verbrennungszone 16 wird in der dargestellten Ausführungsform in analoger Weise über eine in oder nach der zweiten Verbrennungszone 16 (hier in oder an dem Gasauslass 4) angeordnete Sauerstoffmesseinrichtung Q2 gemessen. Aufgrund dieser Informationen regelt die Steuerung 27 die Zufuhr des Oxidationsmittels in die zweite Verbrennungszone 16, beispielsweise indem die Steuerung 27 über eine zweite Oxidationsmittelquelle 29 den Mediumsstrom des Oxidationsmittels durch die zweite Oxidationsmittelzuführung 17 steuert. Das Verbrennungsluftverhältnis λ in der zweiten Verbrennungszone 11 kann dadurch konstant auf einen Wert > 1 geregelt werden.

Die Steuerung 27 kann auch mit einer in oder an dem Gasauslass 4 angeordneten Rauchgasmesseinrichtung N (insbesondere einer Stickoxidmesseeinrichtung) verbunden sein und über diese Rauchgasmesseeinrichtung N Informationen über die verbleibende Konzentration an Stickoxiden im Rauchgas beziehen. Auch aufgrund dieser Informationen kann die Steuerung 27 die Regelung des Verbrennungsluftverhältnisses λ in der ersten Verbrennungszone 11 vornehmen.

Mit Hilfe eines in oder an der ersten Verbrennungszone 11 angeordneten erster Temperatursensors T1 und/oder eines in oder an dem Hochtemperatur-3-Wege-Katalysator 5 angeordneten zweiten Temperatursensors T2 kann die Temperatur in der ersten Verbrennungszone 11 bzw. im Hochtemperatur-3-Wege-Katalysator 5 gemessen und an die Steuerung 27 weitergegeben werden. Die Steuerung 27 steuert auf Basis dieser Informationen die Kühleinrichtung/en, um die Temperatur in der ersten Verbrennungszone 11 (insbesondere beim Eintritt in den Hochtemperatur-3-Wege-Katalysator 5) auf einen Wert zwischen 800°C und 1000°C zu regeln.

Beispielsweise steuert die Steuerung 27 den Mediumsstrom durch die Kühleinrichtung in Form einer Kühlmediumszuführung 14, d.h. die Menge des in die erste Verbrennungszone 11 eingeleiteten Kühlmediums. In der dargestellten Ausführungsform wird der Mediumsstrom der Kühlmediumszuführung 14 gesteuert, indem die Menge des von der Entnahmeeinrichtung 25 entnommenen Kühlmediums geregelt wird.

Falls - wie in Fig. 5 dargestellt - eine Abreinigungseinrichtung 18 für das Abreinigen (Ausblasen) des Hochtemperatur-3-Wege-Katalysators 5 vorhanden ist, kann diese auch über die Steuerung 27 (z.B. periodisch) aktiviert werden. Die Aktivierung der Abreinigungseinrichtung 18 kann auch in Abhängigkeit eines gemessenen Differenzdruckes über den Hochtemperatur-3-Wege-Katalysator 5 geregelt werden. Beispielsweise wird die Abreinigungseinrichtung 18 bei einem bestimmten als kritisch definierten Differenzdruck auslöst. Dafür kann ein Differenzdrucksensor D, der die Druckdifferenz über den Hochtemperatur-3-Wege-Katalysator (d.h. die Differenz zwischen dem direkt nach und dem direkt vor dem Hochtemperatur-3-Wege-Katalysator gemessenem Druck) misst, am Hochtemperatur-3-Wege-Katalysator/s 5 angeordnet sein.

Bei der in Fig. 5 dargestellten Ausführungsform sind aus Gründen der besseren Übersichtlichkeit die Zuführungen 12, 14, 17 nur von einer Seite in die Gasbrennkammer 2 mündend und die Wandkühlung 22 nur an einer Seite der Gasbrennkammer 2 ausgebildet dargestellt.

Die erfindungsgemäße Vorrichtung kann weitere Sensoren oder Messeinrichtungen aufweisen, die mit der Steuerung 27 verbunden sind und Informationen an diese liefern, z.B. einen weiteren Temperatursensor in der zweiten Verbrennungszone 16 oder, falls die Vorrichtung eine Vorreformationszone 19 aufweist, eine weitere Sauerstoffmesseinrichtung für diese Vorreformationszone 19. Die Steuerung 27 kann demnach auch andere Einrichtungen ansteuern, z.B. um eine Zufuhr des Oxidationsmittels an eine Vorreformationszone 19 zu regeln.

Das erfindungsgemäße Verfahren kann wie folgt durchgeführt werden:
Über den Gaseinlass 3 wird ein brennbares, staubarmes Gas in die Gasbrennkammer 2 eingeleitet. Zum "Anstarten" des Verfahrens muss das Gas nach dem Einströmen in die Gasbrennkammer 2 mittels einer nicht dargestellten Zündeinrichtung initialgezündet werden. Von diesem Zeitpunkt an, wird das während dem Verfahren kontinuierlich über den Gaseinlass 3 nachströmende brennbare Gas durch das bereits in der Gasbrennkammer 2 brennende Gas entzündet.

Das Gas durchströmt die Gasbrennkammer 2 in Längsrichtung, d.h. die Strömungsrichtung S verläuft von einem Ende zum anderen Ende der langgestreckten Gasbrennkammer 2.

Nach dem Eintritt in die Gasbrennkammer 2 befindet sich das Gas im vorderen Bereich 6 in dem eine erste Verbrennungszone 11 ausgebildet ist. In der ersten Verbrennungszone 11 wird das Gas teilverbrannt. Das Verbrennungsluftverhältnis λ in der ersten Verbrennungszone 11 ist auf einen Wert zwischen 0,8 und 0,99 geregelt, indem ein Oxidationsmittel eingeleitet wird, das sich mit dem brennbaren Gas vermischt. Die Regelung wird vorzugsweise von einer Steuerung 27 ausgeführt, die mit einer den Sauerstoffgehalt in der ersten Verbrennungszone 11 erfassenden ersten Sauerstoffmesseinrichtung Q1 verbunden ist. Die Steuerung 27 kann auch mit einer am oder hinter dem Gasauslass 4 angeordneten Rauchgasmesseinrichtung N (insbesondere einer Stickoxidmesseeinrichtung) verbunden sein, über diese Rauchgasmesseeinrichtung N Informationen über die verbleibende Konzentration an Stickoxiden im Rauchgas beziehen und aufgrund dieser Informationen die Zufuhr bzw. Einleitung des Oxidationsmittels in die erste Verbrennungszone 11 regeln. Die Temperatur des brennenden Gases (bzw. Gasgemisches) wird durch eine kontinuierlich der ersten Verbrennungszone 11 Wärme entziehende Wandkühlung 22 und durch eine mittels der Steuerung 27 geregelte Zufuhr eines Kühlmediums in die erste Verbrennungszone 11 auf einen Wert zwischen 800°C und 1000°C gekühlt. Die Zufuhr des Kühlmediums erfolgt hinter der Zufuhr des Oxidationsmittels. In der ersten Verbrennungszone 11 werden durch das unterstöchiometrische Verbrennen Teere und Kohlenwasserstoffverbindungen im brennbaren Gas abgebaut.

Nach der ersten Verbrennungszone 11 durchströmt das vorverbrannte Gas den direkt an die erste Verbrennungszone 11 anschließenden Hochtemperatur-3-Wege-Katalysator 5, in dem es gereinigt wird. Insbesondere Stickoxide (NOx), aber auch Kohlenmonoxid (CO) und andere Kohlenwasserstoffverbindungen werden im Hochtemperatur-3-Wege-Katalysator 5 katalytisch reduziert.

Nach dem Hochtemperatur-3-Wege-Katalysator 5 durchströmt das teilverbrannte und gereinigte Gas die direkt an den Hochtemperatur-3-Wege-Katalysator 5 anschließende zweite Verbrennungszone 16, die sich im hinteren Bereich 7 der Gasbrennkammer 2 befindet. In der zweiten Verbrennungszone 16 wird das Gas noch einmal mit einem Oxidationsmittel vermischt und nachverbrannt. Damit werden die noch brennbaren Komponenten des Gases (insbesondere Kohlenmonoxid) verbrannt. Die Zufuhr des Oxidationsmittels in die zweite Verbrennungszone 16 ist vorzugsweise durch die Steuerung 27 gesteuert, die das Verbrennungsluftverhältnis λ in der zweiten Verbrennungszone 16 auf einen Wert über 1 regelt (insbesondere > 1 und < 1,3). Die Temperatur in der zweiten Verbrennungszone 16 beträgt > 800°C. Dies wird durch die Isolation der Wände der zweiten Verbrennungszone 16 sichergestellt. Die Temperatur in der zweiten Verbrennungszone 16 kann auch aktiv angehoben werden, um eine vollständige Verbrennung in kurzer Zeit sicherzustellen. Dies erfolgt beispielsweise indem das in die zweite Verbrennungszone 16 zugeführte Oxidationsmittel vorgewärmt wird, z. B. indem es durch die Wandkühlung 22 der ersten Verbrennungszone 11 geleitet wird und dort Wärme aus der ersten Verbrennungszone 11 aufnimmt.

Das vorverbrannte, gereinigte und anschließend nachverbrannte ("ausgebrannte") Gas verlässt aus dem Gasauslass 4 die Gasbrennkammer 2.

Bevor das Gas in die erste Verbrennungszone 11 strömt, kann es auch eine im vorderen Bereich 6 und in Strömungsrichtung S gesehen vor der ersten Verbrennungszone 11 angeordnete Vorreformationszone 19 durchströmen und in dieser bei einem Verbrennungsluftverhältnis λ von < 0,6, insbesondere < 0,5 teilverbrannt bzw. vorreformiert werden. Durch die Vorreformierung des Gases wird im Gas enthaltener Teer abgebaut und es werden die im Teer gebundenen Stickstoffkomponenten freigesetzt. Dies begünstigt wiederum die Konversion von Stickstoff-Vorläufersubstanzen zu NO und N₂ in der ersten Verbrennungszone 11 und erhöht somit die Effektivität des Hochtemperatur-3-Wege-Katalysators 5 (d.h. den NOx-Abbau), da Stickstoff-Vorläufersubstanzen (insbesondere NH₃) im Hochtemperatur-3-Wege-Katalysator 5 nicht oder nur teilweise umgesetzt werden und, falls sie in der zweiten Verbrennungszone 16 noch vorhanden sind, teilweise zu NOx reagieren können.

Optional kann das Gas nach der zweiten Verbrennungszone 16 noch einen (z.B. im hinteren Bereich 7 oder an den Gasauslass 4 anschließend angeordneten) Oxidationskatalysator 23 durchströmen.

### Bezugszeichenliste:

- 1: Vorrichtung
- 2: Gasbrennkammer
- 3: Gaseinlass
- 4: Gasauslass
- 5: Hochtemperatur-3-Wege-Katalysator
- 6: vorderer Bereich
- 7: hinterer Bereich
- 8: isolierte Wände
- 9: Katalysatorisolierung
- 10: ---
- 11: erste Verbrennungszone
- 12: erste Oxidationsmittelzuführung
- 13: Oxidationsmitteleinlass
- 14: Kühlmediumszuführung
- 15: Kühlmediumseinlass
- 16: zweite Verbrennungszone
- 17: zweite Oxidationsmittelzuführung
- 18: Abreinigungseinrichtung
- 19: Vorreformationszone
- 20: ---
- 21: weitere Oxidationsmittelzuführung
- 22: Wandkühlung
- 23: Oxidationskatalysator
- 24: Kammer
- 25: Entnahmeeinrichtung
- 26: weiterführende Leitung
- 27: Steuerung
- 28: erste Oxidationsmittelquelle
- 29: zweite Oxidationsmittelquelle

- S: Strömungsrichtung
- Q1: erste Sauerstoffmesseinrichtung
- Q2: zweite Sauerstoffmesseinrichtung
- N: Rauchgasmesseinrichtung
- T1: erster Temperatursensor
- T2: zweiter Temperatursensor
- D: Differenzdrucksensor

## Patentansprüche

1. Verfahren zur Erzeugung eines Rauchgases aus einem brennbaren und staubarmen Gas oder Gasgemisch, das direkt oder indirekt aus festen Biomassebrennstoffen, biogenen Reststoffen und/oder biogenen Abfällen erzeugt wird, wobei das Rauchgas in einer Gasbrennkammer (2) erzeugt wird, die an einem Ende einen Gaseinlass (3), an ihrem anderen Ende einen Gasauslass (4), und dazwischen einen integrierten Hochtemperatur-3-Wege-Katalysator (5) aufweist, der die Gasbrennkammer (2) in einen in Strömungsrichtung (S) gesehenen vorderen Bereich (6) und einen in Strömungsrichtung (S) gesehenen hinteren Bereich (7) mit thermisch isolierten Wänden (8) aufteilt, **gekennzeichnet durch** die folgenden in Strömungsrichtung (S) hintereinander erfolgenden Schritte:
• Einleiten des Gases oder Gasgemisches über den Gaseinlass (3) in die Gasbrennkammer (2),
• Teilverbrennen des Gases oder Gasgemisches in einer im vorderen Bereich (6) direkt vor dem Hochtemperatur-3-Wege-Katalysator (5) angeordneten ersten Verbrennungszone (11), bei einem mittels Zufuhr eines Oxidationsmittels auf 0,80 bis 0,99 geregelten Verbrennungsluftverhältnis und einer mittels Kühlung auf 800°C bis 1000°C geregelten Temperatur,
• Reinigen des Gases oder Gasgemisches im Hochtemperatur-3-Wege-Katalysator (5), wobei insbesondere Stickoxide und Kohlenmonoxid katalytisch reduziert werden,
• Nachverbrennen des Gases oder Gasgemisches in einer im hinteren Bereich (7) an den Hochtemperatur-3-Wege-Katalysator (5) anschließenden zweiten Verbrennungszone (16), bei einem mittels Zufuhr eines Oxidationsmittels auf > 1 geregelten Verbrennungsluftverhältnis und einer Temperatur von > 800°C
• Auslassen des aus dem Gas oder Gasgemisch erzeugten Rauchgases über den Gasauslass (4) aus der Gasbrennkammer (2).

2. Verfahren nach Anspruch 1, **dadurch gekennzeichnet, dass** das Oxidationsmittel in der ersten Verbrennungszone (11) in Strömungsrichtung (S) gesehen nur am Beginn der ersten Verbrennungszone (11) oder am Beginn und in wenigstens einem in Strömungsrichtung (S) dahinter angeordneten Bereich zugeführt wird und/oder dass das Oxidationsmittel in der zweiten Verbrennungszone (16) in Strömungsrichtung (S) gesehen nur am Beginn der zweiten Verbrennungszone (16) oder am Beginn und in wenigstens einem in Strömungsrichtung (S) dahinter angeordneten Bereich zugeführt wird.

3. Verfahren nach Anspruch 1 oder 2, **dadurch gekennzeichnet, dass** die Kühlung in der ersten Verbrennungszone (11) durch eine Wandkühlung (22) erfolgt, wobei die Wandkühlung (22) durch Wärmeaustausch mit dem der zweiten Verbrennungszone (16) zuzuführenden Oxidationsmittel oder durch Wärmeaustausch mit den die Gasbrennkammer (2) umgebenden Wänden erfolgt und/oder dass die Kühlung in der ersten Verbrennungszone (11) durch die Zufuhr eines Kühlmediums, insbesondere von rezirkuliertem gekühltem Rauchgas oder Dampf, erfolgt, wobei das Kühlmedium in der ersten Verbrennungszone (11) vorzugsweise in Strömungsrichtung (S) gesehen hinter dem Oxidationsmittel zugeführt wird.

4. Verfahren nach einem der Ansprüche 1 bis 3, **dadurch gekennzeichnet, dass** das Oxidationsmittel in die zweite Verbrennungszone (16) bei Umgebungstemperatur oder vorgewärmt zugeführt wird, insbesondere dass das der zweiten Verbrennungszone (16) zugeführte Oxidationsmittel durch einen stromabwärts der Gasbrennkammer (2) angeordneten Abgaswärmetauscher, durch Wärmeaustausch mit den Wänden der ersten Verbrennungszone (11) und/oder durch eine externe Vorwärmvorrichtung, z.B. elektrisch, vorgewärmt wird.

5. Verfahren nach einem der Ansprüche 1 bis 4, **dadurch gekennzeichnet, dass** die Kühlung und somit die Temperatur in der ersten Verbrennungszone (11) mittels einer Steuerung (27) geregelt wird, die dafür Informationen von wenigstens einem in oder an der ersten Verbrennungszone (11), insbesondere direkt vor dem Hochtemperatur-3-Wege-Katalysator (5), angeordneten und/oder wenigstens einem in oder an dem Hochtemperatur-3-Wege-Katalysator (5) angeordneten Temperatursensor (T1, T2), vorzugsweise Thermoelement, bezieht.

6. Verfahren nach einem der Ansprüche 1 bis 5, **dadurch gekennzeichnet, dass** die Zufuhr des Oxidationsmittels und somit das Verbrennungsluftverhältnis in der ersten Verbrennungszone (11) mittels einer Steuerung (27) geregelt wird, die dafür Informationen von wenigstens einer den Sauerstoffgehalt der ersten Verbrennungszone (11) messenden Lambdasonde, einer den Sauerstoffgehalt der ersten Verbrennungszone (11) messenden Lasermesseinrichtung, einer den Sauerstoffgehalt der ersten Verbrennungszone (11) messenden extraktiven Rauchgasmesseinrichtung und/oder einer den Stickoxidgehalt des aus dem Gasauslass (4) austretenden Rauchgases messenden Rauchgasmesseinrichtung (N) bezieht.

7. Vorrichtung (1) zur Erzeugung eines Rauchgases aus einem brennbaren und staubarmen Gases oder Gasgemisches, das direkt oder indirekt aus festen Biomassebrennstoffen, biogenen Reststoffen und/oder biogenen Abfällen erzeugt wird, mit einer Gasbrennkammer (2), die an einem Ende einen Gaseinlass (3), an ihrem anderen Ende einen Gasauslass (4) aufweist, **dadurch gekennzeichnet, dass** die Gasbrennkammer (2) durch einen integrierten Hochtemperatur-3-Wege-Katalysator (5), insbesondere zur katalytischen Reduktion von Stickoxiden und Kohlenmonoxid, in einen in Strömungsrichtung (S) gesehenen vorderen Bereich (6) und einen in Strömungsrichtung (S) gesehenen hinteren Bereich (7) mit thermisch isolierten Wänden (8) aufgeteilt wird, dass im vorderen Bereich (6) direkt vor dem Hochtemperatur-3-Wege-Katalysator (5) angeordnet eine erste Verbrennungszone (11) ausgebildet ist, die wenigstens eine Kühleinrichtung und eine erste Oxidationsmittelzuführung (12) aufweist, und dass im hinteren Bereich (7) an den Hochtemperatur-3-Wege-Katalysator (5) anschließend eine zweite Verbrennungszone (16) ausgebildet ist, die eine zweite Oxidationsmittelzuführung (17) aufweist.

8. Vorrichtung nach Anspruch 7, **dadurch gekennzeichnet, dass** die erste Oxidationsmittelzuführung (12) in Strömungsrichtung (S) gesehen am Beginn der ersten Verbrennungszone (11) oder am Beginn und in wenigstens einem in Strömungsrichtung (S) dahinter angeordneten Bereich der ersten Verbrennungszone (11) wenigstens einen in die Gasbrennkammer (2) mündenden Oxidationsmitteleinlass (13) aufweist.

9. Vorrichtung nach Anspruch 7 oder 8, **dadurch gekennzeichnet, dass** die zweite Oxidationsmittelzuführung (17) in Strömungsrichtung (S) gesehen am Beginn der zweiten Verbrennungszone (16) oder am Beginn und in wenigstens einem in Strömungsrichtung (S) dahinter angeordneten Bereich der zweiten Verbrennungszone (16) wenigstens einen in die Gasbrennkammer (2) mündenden Oxidationsmitteleinlass (13) aufweist.

10. Vorrichtung nach einem der Ansprüche 7 bis 9, **dadurch gekennzeichnet, dass** die erste Verbrennungszone (11) als Kühleinrichtung eine Wandkühlung (22) aufweist, wobei die Wandkühlung (22) insbesondere wenigstens eine Leitung oder Kammer (24) aufweist, die Teil der zweiten Oxidationsmittelzuführung (17) ist und für einen Wärmeaustausch mit der ersten Verbrennungszone (11) eingerichtet ist, wofür sie vorzugsweise in Kontakt mit der Wand der Gasbrennkammer (2) in der ersten Verbrennungszone (11) steht, oder wobei die Wandkühlung (22) dazu eingerichtet ist, einen Wärmeaustausch mit Wänden, die die Gasbrennkammer (2) umgeben, auszuführen und/oder dass die erste Verbrennungszone (11) als Kühleinrichtung eine Kühlmediumszuführung (14) aufweist, die insbesondere mit einer nach dem Gasauslass (4) angeordneten Entnahmeeinrichtung (25) von rezirkuliertem gekühltem Rauchgas oder Dampf verbunden ist.

11. Vorrichtung nach Anspruch 10, **dadurch gekennzeichnet, dass** die Kühlmediumszuführung (14) in Strömungsrichtung (S) gesehen hinter dem Oxidationsmitteleinlass (13) oder ggf. den Oxidationsmitteleinlässen (13) der ersten Verbrennungszone (11) wenigstens einen in die Gasbrennkammer (2) mündenden Kühlmediumseinlass (15) aufweist.

12. Vorrichtung nach einem der Ansprüche 7 bis 11, **dadurch gekennzeichnet, dass** die zweite Oxidationsmittelzuführung (17) der zweiten Verbrennungszone (16) mit einem stromabwärts der Gasbrennkammer (2) angeordneten Abgaswärmetauscher und/oder mit einer externen, z.B. elektrischen, Vorwärmevorrichtung verbunden ist und/oder wenigstens eine Leitung oder Kammer (24) aufweist, die für einen Wärmeaustausch mit der ersten Verbrennungszone (11) eingerichtet ist, und dafür vorzugsweise in Kontakt mit der Wand der Gasbrennkammer (2) in der ersten Verbrennungszone (11) steht.

13. Vorrichtung nach einem der Ansprüche 7 bis 12, **dadurch gekennzeichnet, dass** die Vorrichtung (1) eine Steuerung (27) zum Regeln der Kühleinrichtung/en und somit der Temperatur in der ersten Verbrennungszone (11) aufweist, die mit wenigstens einem in oder an der ersten Verbrennungszone (11), insbesondere direkt vor dem Hochtemperatur-3-Wege-Katalysator (5), angeordneten und/oder wenigstens einem in oder an dem Hochtemperatur-3-Wege-Katalysator angeordneten Temperatursensor (T1, T2), vorzugsweise Thermoelement, verbunden ist.

14. Vorrichtung nach Anspruch einem der Ansprüche 7 bis 13, **dadurch gekennzeichnet, dass** die Vorrichtung (1) eine Steuerung (27) zum Regeln des Mediumsstroms durch die erste Oxidationsmittelzuführung (12) und somit des Verbrennungsluftverhältnisses in der ersten Verbrennungszone (11) aufweist, die mit wenigstens einer den Sauerstoffgehalt der ersten Verbrennungszone messenden ersten Sauerstoffmesseinrichtung (Q1), vorzugsweise einer Lambdasonde, einer Lasermessvorrichtung oder einer extraktiven Rauchgasmesseinrichtung, und/oder einer den Stickoxidgehalt des aus dem Gasauslass (4) austretenden Rauchgases messenden Rauchgasmesseinrichtung (N) verbunden ist.

15. System zur Erzeugung eines Rauchgases aus festen Biomassebrennstoffen, biogenen Reststoffen und/oder biogenen Abfällen, **dadurch gekennzeichnet, dass** das System eine Anlage zur Erzeugung von brennbaren Gasen aus festen Biomassebrennstoffen, biogenen Reststoffen und/oder biogenen Abfällen, sowie eine damit verbundene Vorrichtung (1) zur Erzeugung eines Rauchgases aus dem brennbaren Gas oder Gasgemisch aufweist, dass die Anlage dazu eingerichtet ist das brennbare Gas oder Gasgemisch mit einem Staubgehalt von < 100 mg/Nm3, insbesondere < 20 mg/Nm3, bereitzustellen, wobei die Anlage vorzugsweise ein Gegenstromvergasungsreaktor, ein Festbettreaktor oder ein Gegenstrompyrolysereaktor ist, und dass die Vorrichtung (1) eine Vorrichtung (1) nach einem der Ansprüche 7 bis 14 ist.

## Claims

1. Method for generating flue gas from a combustible and low-dust gas or gas mixture produced directly or indirectly from solid biomass fuels, biogenic residues, and/or biogenic waste, wherein the flue gas is generated in a gas combustion chamber (2) which has a gas inlet (3) at one end, a gas outlet (4) at its other end, and an integrated high-temperature 3-way catalytic converter (5) between them, which divides the gas combustion chamber (2) into a front area (6) as seen in the direction of flow (S) and into a rear area (7) as seen in the direction of flow (S) with thermally insulated walls (8), **characterized by** the following steps, which follow one another in the direction of flow (S):
• Introduction of the gas or gas mixture into the gas combustion chamber (2) via the gas inlet (3),
• Partial combustion of the gas or gas mixture in a first combustion zone (11) located in the front region (6) directly in front of the high-temperature 3-way catalytic converter (5), with a combustion air ratio controlled to between 0.80 and 0.99 by supplying an oxidizing agent and a temperature controlled to between 800°C and 1000°C by cooling,
• Purification of the gas or gas mixture in the high-temperature 3-way catalytic converter (5), whereby nitrogen oxides and carbon monoxide in particular are catalytically reduced,
• Post-combustion of the gas or gas mixture in a second combustion zone (16) connected to the high-temperature 3-way catalytic converter (5) in the rear area (7), with a combustion air ratio controlled to > 1 by supplying an oxidizing agent and a temperature of > 800°C
• Discharge of the flue gas produced from the gas or gas mixture via the gas outlet (4) from the gas combustion chamber (2).

2. Method according to claim 1, **characterized in that** the oxidizing agent is supplied in the first combustion zone (11), as seen in the direction of flow (S), only at the beginning of the first combustion zone (11) or at the beginning and in at least one area arranged behind it in the direction of flow (S), and/or that the oxidizing agent is supplied in the second combustion zone (16), as seen in the direction of flow (S), only at the beginning of the second combustion zone (16) or at the beginning and in at least one area arranged behind it in the direction of flow (S).

3. Method according to claim 1 or 2, **characterized in that** the cooling in the first combustion zone (11) is effected by wall cooling (22), wherein the wall cooling (22) is effected by heat exchange with the oxidizing agent to be supplied to the second combustion zone (16) or by heat exchange with the walls surrounding the gas combustion chamber (2), and/or that cooling in the first combustion zone (11) is effected by supplying a cooling medium, in particular recirculated cooled flue gas or steam, wherein the cooling medium is supplied in the first combustion zone (11) preferably behind the oxidizing agent as seen in the direction of flow (S).

4. Method according to one of claims 1 to 3, **characterized in that** the oxidizing agent is supplied to the second combustion zone (16) at ambient temperature or preheated, in particular that the oxidizing agent supplied to the second combustion zone (16) is cooled by heat exchange with the walls of the first combustion zone (11) and/or by an external preheating device, e.g. electrical, by means of a flue gas heat exchanger arranged downstream of the gas combustion chamber (2), by heat exchange with the walls of the first combustion zone (11) and/or by an external preheating device, e.g. electrical.

5. Method according to one of claims 1 to 4, **characterized in that** the cooling and thus the temperature in the first combustion zone (11) is regulated by means of a control (27) which receives information for this purpose from at least one temperature sensor (T1, T2), preferably a thermocouple, arranged in or on the first combustion zone (11), in particular directly in front of the high-temperature 3-way catalyst (5), and/or at least one temperature sensor (T1, T2), preferably a thermocouple, arranged in or on the high-temperature 3-way catalytic converter (5).

6. Method according to one of claims 1 to 5, **characterized in that** the supply of the oxidizing agent and thus the combustion air ratio in the first combustion zone (11) is controlled by means of a control system (27) which obtains information for this purpose from at least one lambda probe measuring the oxygen content of the first combustion zone (11), a laser measuring device measuring the oxygen content of the first combustion zone (11), an extractive flue gas measuring device measuring the oxygen content of the first combustion zone (11) and/or a flue gas measuring device (N) measuring the nitrogen oxide content of the flue gas emerging from the gas outlet (4).

7. Device (1) for generating flue gas from a combustible and low-dust gas or gas mixture produced directly or indirectly from solid biomass fuels, biogenic residues and/or biogenic waste, with a gas combustion chamber (2) which has a gas inlet (3) at one end and a gas outlet (4) at its other end, **characterized in that** the gas combustion chamber (2) is divided by an integrated high-temperature 3-way catalyst (5), in particular for the catalytic reduction of nitrogen oxides and carbon monoxide, into a front section (6) as seen in the direction of flow (S) and a rear section (7) as seen in the direction of flow (S) with thermally insulated walls (8), that a first combustion zone (11) is formed in the front region (6) directly in front of the high-temperature 3-way catalytic converter (5), which has at least one cooling device and a first oxidizing agent supply (12), and that a second combustion zone (16) is formed in the rear section (7) adjacent to the high-temperature 3-way catalytic converter (5), which has a second oxidizing agent supply (17).

8. Device according to claim 7, **characterized in that** the first oxidizing agent supply (12) has at least one oxidizing agent inlet (13) opening into the gas combustion chamber (11) at the beginning of the first combustion zone (11) or at the beginning and in at least one area of the first combustion zone (11) arranged behind it in the direction of flow (S), as seen in the direction of flow (S).

9. Device according to claim 7 or 8, **characterized in that** the second oxidizing agent supply (17), as seen in the direction of flow (S), has at least one oxidizing agent inlet (13) opening into the gas combustion chamber (2).

10. Device according to one of claims 7 to 9, **characterized in that** the first combustion zone (11) has wall cooling (22) as a cooling device, wherein the wall cooling (22) has, in particular, at least one duct or chamber (24) which is part of the second oxidizing agent supply (17) and is designed for heat exchange with the first combustion zone (11), for which purpose it is preferably in contact with the wall of the gas combustion chamber (2) in the first combustion zone (11), or wherein the wall cooling (22) is designed to perform heat exchange with walls surrounding the gas combustion chamber (2) , and/or that the first combustion zone (11) has a cooling medium supply (14) as a cooling device, which is connected in particular to a removal device (25) for recirculated cooled flue gas or steam arranged after the gas outlet (4).

11. Device according to claim 10, **characterized in that** the cooling medium supply (14) has at least one cooling medium inlet (15) opening into the gas combustion chamber (2) behind the oxidizing agent inlet (13) or, if applicable, the oxidizing agent inlets (13) of the first combustion zone (11), as seen in the direction of flow (S).

12. Device according to one of claims 7 to 11, **characterized in that** the second oxidizing agent supply (17) of the second combustion zone (16) is connected to an exhaust gas heat exchanger arranged downstream of the gas combustion chamber (2) and/or to an external, e.g. electrical, preheating device and/or has at least one pipe or chamber (24) which is designed for heat exchange with the first combustion zone (11) and for this purpose is preferably in contact with the wall of the gas combustion chamber (2) in the first combustion zone (11).

13. Device according to one of claims 7 to 12, **characterized in that** the device (1) has a control (27) for regulating the cooling device/s and thus the temperature in the first combustion zone (11), which is connected to at least one temperature sensor (T1, T2), preferably a thermocouple, arranged in or on the first combustion zone (11), in particular directly in front of the high-temperature 3-way catalytic converter (5), and/or at least one temperature sensor (T1, T2), preferably a thermocouple, arranged in or on the high-temperature 3-way catalytic converter.

14. Device according to one of claims 7 to 13, **characterized in that** the device (1) has a control system (27) for regulating the medium flow through the first oxidizing agent supply (12) and thus the combustion air ratio in the first combustion zone (11), which is connected to at least one first oxygen measuring device (Q1), preferably a lambda probe, a laser measuring device or an extractive flue gas measuring device, which measures the oxygen content of the first combustion zone, and/or a flue gas measuring device (N) which measures the nitrogen oxide content of the flue gas emerging from the gas outlet (4).

15. System for generating a flue gas from solid biomass fuels, biogenic residues, and/or biogenic waste, **characterized in that** the system comprises an installation for generating combustible gases from solid biomass fuels, biogenic residues, and/or biogenic waste, as well as an associated device (1) for generating a flue gas from the combustible gas or gas mixture, that the installation is designed to provide the combustible gas or gas mixture with a dust content of < 100 mg/Nm3, in particular < 20 mg/Nm3, wherein the installation is preferably a countercurrent gasification reactor, a fixed bed reactor or a countercurrent pyrolysis reactor, and that the device (1) is a device (1) according to one of claims 7 to 14.

## Revendications

1. Procédé de production d'un gaz de fumée à partir d'un gaz ou mélange de gaz combustible et pauvre en poussières qui est produit directement ou indirectement à partir de combustibles de biomasse solides, de résidus biogènes et/ou de déchets biogènes, le gaz de fumée étant produit dans une chambre de combustion de gaz (2) qui présente à une extrémité une entrée de gaz (3), à son autre extrémité une sortie de gaz (4), et entre les deux un catalyseur à trois voies haute température (5) intégré qui divise la chambre de combustion de gaz (2) en un secteur (6) avant, vu dans le sens d'écoulement (S), et en un secteur (7) arrière, vu dans le sens d'écoulement (S), avec des parois (8) thermiquement isolées, **caractérisé par** les étapes survenant l'une après l'autre dans le sens d'écoulement (S) :
· introduction du gaz ou du mélange de gaz dans la chambre de combustion de gaz (2) via l'entrée de gaz (3),
· combustion partielle du gaz ou du mélange de gaz dans une première zone de combustion (11) disposée dans le secteur (6) avant directement avant le catalyseur à trois voies haute température (5), en présence d'un taux d'air de combustion réglé à 0,80 à 0,99 au moyen de l'amenée d'un agent oxydant et d'une température réglée à 800°C à 1000 °C au moyen d'un refroidissement,
· nettoyage du gaz ou du mélange de gaz dans le catalyseur à trois voies haute température (5), des oxydes d'azote et du monoxyde carbone en particulier étant réduits par voie catalytique,
· post-combustion du gaz ou du mélange de gaz dans une deuxième zone de combustion (16) à la suite du catalyseur à trois voies haute température (5) dans le secteur (7) arrière, en présence d'un taux d'air de combustion réglé à > 1 au moyen de l'amenée d'un agent oxydant et d'une température de > 800°C évacuation hors de la chambre de combustion de gaz (2),
· via la sortie de gaz (4), du gaz de fumée produit à partir du gaz ou du mélange de gaz.

2. Procédé selon la revendication 1, **caractérisé en ce que**, dans la première zone de combustion (11), vu dans le sens d'écoulement (S), l'agent oxydant est conduit uniquement au début de la première zone de combustion (11) ou au début et dans au moins un secteur disposé derrière dans le sens d'écoulement (S) et/ou **en ce que**, dans la deuxième zone de combustion (16), vu dans le sens d'écoulement (S), l'agent oxydant est conduit uniquement au début de la deuxième zone de combustion (16) ou au début et dans au moins un secteur disposé derrière dans le sens d'écoulement (S).

3. Procédé selon la revendication 1 ou 2, **caractérisé en ce que** le refroidissement est effectué dans la première zone de combustion (11) par un refroidissement de paroi (22), le refroidissement de paroi (22) s'effectuant par échange de chaleur avec l'agent oxydant devant être conduit à la deuxième zone de combustion (16), ou par échange de chaleur avec les parois entourant la chambre de combustion de gaz (2) et/ou **en ce que** le refroidissement dans la première zone de combustion (11) est effectué par l'amenée d'un fluide de refroidissement, en particulier de gaz de fumée ou de vapeur refroidi/e remis/e en circulation, l'agent de refroidissement étant conduit dans la première zone de combustion (11) de préférence derrière l'agent oxydant, vu dans le sens d'écoulement (S).

4. Procédé selon l'une des revendications 1 à 3, **caractérisé en ce que** l'agent oxydant est conduit dans la deuxième zone de combustion (16) à la température ambiante ou est préchauffé, en particulier **en ce que** l'agent oxydant conduit à la deuxième zone de combustion (16) est préchauffé par un échangeur de chaleur de gaz brûlés disposé en aval de la chambre de combustion de gaz (2), par échange de chaleur avec les parois de la première zone de combustion (11) et/ou par un dispositif de préchauffage externe, par ex. électriquement.

5. Procédé selon l'une des revendications 1 à 4, **caractérisé en ce que** le refroidissement et donc la température dans la première zone de combustion (11) sont régulés au moyen d'une commande (27) qui reçoit pour cela des informations d'au moins un capteur de température (T1, T2), de préférence un thermocouple, disposé dans ou sur la première zone de combustion (11), en particulier directement avant le catalyseur à trois voies haute température (5) et/ou d'au moins un capteur de température, de préférence un thermocouple, disposé dans ou sur le catalyseur à trois voies haute température (5).

6. Procédé selon l'une des revendications 1 à 5, **caractérisé en ce que** l'amenée de l'agent oxydant, et donc le taux d'air de combustion dans la première zone de combustion (11), sont réglés au moyen d'une commande (27) qui reçoit pour cela des informations d'au moins une sonde lambda mesurant la teneur en oxygène de la première zone de combustion (11), d'un équipement de mesure au laser mesurant la teneur en oxygène de la première zone de combustion (11), d'un équipement de mesure de gaz de fumée extractif mesurant la teneur en oxygène de la première zone de combustion (11) et/ou d'un équipement de mesure de gaz de fumée (N) mesurant la teneur en oxyde d'azote du gaz de fumée sortant de la sortie de gaz (4).

7. Dispositif (1) de production d'un gaz de fumée à partir d'un gaz ou mélange de gaz combustible et pauvre en poussières qui est produit directement ou indirectement à partir de combustibles de biomasse solides, de résidus biogènes et/ou de déchets biogènes, avec une chambre de combustion de gaz (2) qui présente à une extrémité une entrée de gaz (3), à son autre extrémité une sortie de gaz (4), **caractérisé en ce que** la chambre de combustion de gaz (2) est divisée par un catalyseur à trois voies haute température (5) intégré, en particulier pour la réduction catalytique d'oxydes d'azote et de monoxyde carbone, en un secteur (6) avant, vu dans le sens d'écoulement (S), et en un secteur (7) arrière, vu dans le sens d'écoulement (S), avec des parois (8) thermiquement isolées, **en ce que**, disposée dans le secteur (6) avant, directement avant le catalyseur à trois voies haute température (5), il est constitué une première zone de combustion (11) qui présente au moins un équipement de refroidissement et une première amenée d'agent oxydant (12), et **en ce que**, dans le secteur (7) arrière à la suite du catalyseur à trois voies haute température (5), il est constitué une deuxième zone de combustion (16) qui présente une deuxième amenée d'agent oxydant (17).

8. Dispositif selon la revendication 7, **caractérisé en ce que**, au début, vu dans le sens d'écoulement (S), de la première zone de combustion (11) ou au début et dans au moins un secteur, disposé en arrière, vu dans le sens d'écoulement (S), de la première zone de combustion (11), la première amenée d'agent oxydant (12) présente au moins une entrée d'agent oxydant (13) débouchant dans la chambre de combustion de gaz (2).

9. Dispositif selon la revendication 7 ou 8, **caractérisé en ce que**, au début, vu dans le sens d'écoulement (S), de la deuxième zone de combustion (16) ou au début et dans au moins un secteur, disposé en arrière, vu dans le sens d'écoulement (S), de la deuxième zone de combustion (16), la deuxième amenée d'agent oxydant (17) présente au moins une entrée d'agent oxydant (13) débouchant dans la chambre de combustion de gaz (2).

10. Dispositif selon l'une des revendications 7 à 9, **caractérisé en ce que** la première zone de combustion (11) présente, en tant qu'équipement de refroidissement, un refroidissement de paroi (22), le refroidissement de paroi (22) présentant en particulier au moins une conduite ou une chambre (24), qui fait partie de la deuxième amenée d'agent oxydant (17) et qui est agencée pour un échange de chaleur avec la première zone de combustion (11), échange pour lequel elle est de préférence en contact avec la paroi de la chambre de combustion de gaz (2) dans la première zone de combustion (11), ou le refroidissement de paroi (22) étant agencé pour réaliser un échange de chaleur avec des parois qui entourent la chambre de combustion de gaz (2), et/ou **en ce que** la première zone de combustion (11) présente, en tant qu'équipement de refroidissement, une amenée de fluide de refroidissement (14) qui est raccordée en particulier à un équipement de prélèvement (25) de gaz de fumée ou de vapeur refroidi(e) remis(e) en circulation, disposé après la sortie de gaz (4).

11. Dispositif selon la revendication 10, **caractérisé en ce que**, vu dans le sens d'écoulement (S), derrière l'entrée d'agent oxydant (13) ou éventuellement les entrées d'agent oxydant (13) de la première zone de combustion (11), l'amenée de fluide de refroidissement (14) présente au moins une entrée d'agent oxydant (15) débouchant dans la chambre de combustion de gaz (2).

12. Dispositif selon l'une des revendications 7 à 11, **caractérisé en ce que** la deuxième amenée d'agent oxydant (17) de la deuxième zone de combustion (16) est raccordée à un échangeur de chaleur de gaz brûlés disposé en aval de la chambre de combustion de gaz (2) et/ou à un dispositif de préchauffage externe, par ex. électrique, et/ou présente au moins une conduite ou une chambre (24) qui est agencée pour un échange de chaleur avec la première zone de combustion (11) et est pour cela de préférence en contact avec la paroi de la chambre de combustion de gaz (2) dans la première zone de combustion (11).

13. Dispositif selon l'une des revendications 7 à 12, **caractérisé en ce que** le dispositif (1) présente une commande (27), destinée au réglage du/des dispositif/s de refroidissement et donc de la température dans la première zone de combustion (11), qui est raccordée à au moins un capteur de température (T1, T2), de préférence un thermocouple, disposé dans ou sur la première zone de combustion (11), en particulier directement avant le catalyseur à trois voies haute température (5) et/ou à au moins un capteur de température, de préférence un thermocouple, disposé dans ou sur le catalyseur à trois voies haute température (5).

14. Dispositif selon l'une des revendications 7 à 13, **caractérisé en ce que** le dispositif (1) présente une commande (27), destinée au réglage du flux de fluide par la première amenée d'agent oxydant (12) et donc du taux d'air de combustion dans la première zone de combustion (11), qui est raccordée à au moins un premier équipement de mesure d'oxygène (Q1) mesurant la teneur en oxygène de la première zone de combustion, de préférence une sonde lambda, à un dispositif de mesure au laser ou à un équipement de mesure de gaz de fumée extractif et/ou à un équipement de mesure de gaz de fumée (N) mesurant la teneur en oxyde d'azote du gaz de fumée sortant de la sortie de gaz (4).

15. Système de production d'un gaz de fumée à partir de combustibles de biomasse solides, de résidus biogènes et/ou de déchets biogènes, **caractérisé en ce que** le système présente une installation de production de gaz combustibles à partir de combustibles de biomasse solides, de résidus biogènes et/ou de déchets biogènes, ainsi qu'un dispositif (1), qui lui est raccordé, destiné à la production d'un gaz de fumée à partir du gaz ou mélange de gaz combustible, **en ce que** l'installation est agencée pour fournir le gaz ou mélange de gaz combustible avec une teneur en poussières de < 100 mg/Nm3, en particulier de < 20 mg/Nm3, l'installation étant de préférence un réacteur de gazéification à contre-courant, un réacteur en lit fixe ou un réacteur de pyrolyse à contre-courant, et **en ce que** le dispositif (1) est un dispositif (1) selon l'une des revendications 7 à 14.
